# EUROPÄISCHE PATENTSCHRIFT

(11) **EP 2 461 948 B1**
(45) Veröffentlichungstag und Bekanntmachung des Hinweises auf die Patenterteilung: **09.10.2013**
(21) Anmeldenummer: 10752276.5
(22) Anmeldetag: 04.08.2010
(51) Int. Cl.: B25J 17/02, B25J 19/00

(54) **PARALLELROBOTER**
PARALLEL ROBOT
ROBOT PARALLELE

(30) Priorität: 04.08.2009 DE 102009035992
(43) Veröffentlichungstag der Anmeldung: 13.06.2012
(73) Patentinhaber: Majatronic GmbH, 77694 Kehl-Goldscheuer (DE)
(72) Erfinder: ILCH, Hartmut, 77694 Kehl (DE)
(74) Vertreter: Geitz Truckenmüller Lucht
(86) Internationale Anmeldenummer: PCT/DE2010/000914
(87) Internationale Veröffentlichungsnummer: WO 2011/015189

(56) Entgegenhaltungen:
- EP-B1- 1 424 161
- JP-A- 2005 028 558
- US-B1- 6 330 837

## Beschreibung

Die Erfindung geht aus von einem Industrieroboter mit Parallelkinematik, welcher mit einer Roboterbasis, mit einem als Aufnahme für einen Greifer oder ein Werkzeug dienenden Trägerelement und mit mehreren Betätigungseinheiten zum Bewegen des Trägerelements ausgestattet ist.

Derartige Industrieroboter mit Parallelkinematik dienen zum Bewegen, Positionieren und/ oder Bearbeiten eines Gegenstands im Raum. Zu Ihnen zählen beispielsweise Deltaroboter. Diese sind mit mindestens zwei Steuerarmen als Betätigungseinheiten ausgestattet. Jeder Steuerarm weist einen oberen und einen unteren Armabschnitt auf, welche beweglich miteinander verbunden sind. Jeder der oberen Armabschnitte wird durch einen Antrieb, beispielsweise eine Motor-Getriebe-Einheit, angetrieben. Die Antriebe sind an der Roboterbasis angeordnet. Die Bewegung der oberen Armabschnitte wird über die unteren Armabschnitte auf ein Trägerelement übertragen. Jeder untere Armabschnitt weist zwei parallele, in Längsrichtung des Armabschnitts verlaufende Stangen oder Streben auf, die an ihrem einen Ende beweglich mit dem zugehörigen oberen Armabschnitt und mit ihrem anderen Ende beweglich mit dem Trägerelement verbunden sind. An dem Trägerelement kann beispielsweise ein Greifer zum Aufnehmen eines Gegenstands oder ein Werkzeug zum Bearbeiten eines Gegenstands angeordnet sein. Das Trägerelement ist hierzu mit einer Aufnahme für einen Greifer oder ein Werkzeug ausgestattet. Durch die aufeinander abgestimmte Bewegung der angetriebenen oberen Armabschnitte kann der an dem Trägerelement angeordnete Greifer oder das Werkzeug gezielt in mehreren Dimensionen bewegt werden. Die Steuerarme bewirken eine räumliche Parallelogrammführung des Trägerelements. Die daraus resultierende parallele Kinematik ermöglicht eine schnelle und präzise Bewegung des Trägerelements und des daran angeordneten Greifers oder Werkzeugs. Durch eine zusätzliche an der Roboterbasis angeordnete Übertragungseinrichtung kann auf den Greifer oder das Werkzeug ein Drehmoment und/ oder eine Kraft übertragen werden. Ist der Industrieroboter mit drei Steuerarmen ausgestattet, wird die Übertragungseinrichtung als vierte Achse bezeichnet.

Neben Deltarobotern zählen auch Seilroboter zu Industrierobotern mit Parallelkinematik. Seilroboter sind mit Seilen als Betätigungseinheiten ausgestattet. Mit seinem einen Ende ist jedes Seil mit einem Antrieb verbunden. Die Antriebe sind als Rotations- oder Linearantriebe ausgebildet, welche die freie Länge der Seile durch Auf- und Abwickeln auf eine mit einem Seilende verbundene Welle oder durch Vor- und Zurückschieben einer mit einem Seilende verbundenen Schubstange vorgeben. An ihrem dem Antrieb abgewandten Ende sind die Seile mit einem Trägerelement für einen Greifer oder ein Werkzeug verbunden. Dabei ist dafür Sorge zu tragen, dass die Seile gespannt sind. Durch die aufeinander abgestimmte Bewegung der Antriebe kann der an dem Trägerelement angeordnete Greifer oder das Werkzeug gezielt in mehreren Dimensionen bewegt werden.

Ein an dem Trägerelement angeordneter Greifer oder ein an dem Trägerelement angeordnetes Werkzeug wird über einen pneumatischen, hydraulischen oder elektrischen Antrieb betätigt. Hierzu ist der Greifer oder das Werkzeug über hydraulische, pneumatischen, elektrische oder optische Versorgungsleitungen mit der Roboterbasis verbunden, an der der Antrieb oder ein Teil des Antriebs zur Betätigung des Greifers oder des Werkzeugs angeordnet ist. Die Versorgungsleitungen dienen dem Transport von Druckluft, einer Druckflüssigkeit, des elektrischen Stroms oder von Licht. Licht kann beispielsweise für einen an dem Greifer oder dem Werkzeug angeordneten Sensor notwendig sein. Die Versorgungsleitungen verbinden dabei frei und ohne Führung die Roboterbasis mit dem Trägerelement oder sie sind an den Betätigungseinheiten oder an der Übertragungseinrichtung entlang geführt.

Ein derartiger Industrieroboter mit Betätigungseinheiten in Form von Steuerarmen ist beispielsweise aus der EP 250 470 A1 bekannt.

Da derartige Industrieroboter auch im Bereich der Lebensmittelherstellung und der Lebensmittelbearbeitung eingesetzt werden, müssen sie hohe Anforderun-gen bezüglich der Hygiene, der Unbedenklichkeit der Materialien, aus denen die Komponenten des Industrieroboters hergestellt sind, und der Verträglichkeit mit den zu bewegenden oder zu bearbeitenden Gegenständen erfüllen. Insbesondere die mit den Gegenständen in Kontakt tretenden Komponenten des Industrieroboters müssen regelmäßig gereinigt werden. Dabei ist es wichtig, dass eine zur Reinigung eingesetzte Reinigungsflüssigkeit die Komponenten des Industrieroboters umspülen kann. Als nachteilig erweist sich dabei insbesondere die Reinigung der Versorgungsleitungen. Sind diese an den Betätigungseinheiten oder der Übertragungseinrichtung entlang geführt, so können sich in den Zwischenräumen zwischen den Versorgungsleitungen und den Betätigungseinheiten oder der Übertragungseinrichtung Verschmutzungen ansammeln, die einer Reinigung nur schwer zugänglich sind. Ferner werden an die Versorgungsleitungen, insbesondere an ihre Ummantelung oder Umhüllung besondere Anforderungen hinsichtlich ihrer Unbedenklichkeit im Bezug auf die mit dem Industrieroboter bearbeiteten Gegenstände gestellt. Schließlich besteht die Gefahr, dass die Versorgungsleitungen bei der Reinigung beschädigt werden.

In der US 6.330.837 B1 ist ein Industrieroboter mit Parallelkinematik offenbart, der mit einer Roboterbasis, einem Trägerelement für ein Werkzeug, sechs Betätigungseinheiten und einer zusätzlichen Achse zur Übertragung von Drehmomenten von einem an der Roboterbasis angeordneten Motor auf ein Werkzeug ausgestattet ist. Die zusätzliche Achse weist einen länglichen Achsenabschnitt und zwei Kreuzgelenke auf, um der Bewegung des Trägerelements folgen zu können. Der längliche Achsenabschnitt kann hohl ausgebildet sein und elektrische Leitungen, Flüssigkeitsleitungen oder Kabel aufnehmen. Als nachteilig erweist sich jedoch, dass die Leitungen oder Kabel im Bereich der Kreuzgelenke frei geführt und daher ungeschützt sind.

Der Erfindung liegt die Aufgabe zugrunde, einen Industrieroboter mit Parallelkinematik zur Verfügung zu stellen, der eine zuverlässige Reinigung aller Komponenten ermöglicht, bei dem eine Beschädigung der Versorgungsleitungen vermieden wird, und bei dem keine besonderen Anforderungen an das Material der Versorgungsleitungen gestellt wird.

Diese Aufgabe wird durch einen Industrieroboter mit den Merkmalen des Anspruchs 1 gelöst Er ist mit mindestens einem länglichen Hohlkörper ausgestattet, der direkt oder indirekt mit der Roboterbasis verbunden ist. Der längliche Hohlkörper weist einen in Längsrichtung verlaufenden durchgängigen Hohlraum auf. Ferner ist der längliche Hohlkörper über ein innen hohl ausgebildetes Gelenk mit mehreren Freiheitsgraden mit dem Trägerelement beweglich verbunden. Dabei schließt sich der Hohlraum des hohlen Gelenks an den Hohlraum des länglichen Hohlkörpers an und bildet einen Kanal von der Roboterbasis bis zu dem Trägerelement. Durch die Hohlräume des länglichen Hohlkörpers und des hohlen Gelenks sind die Versorgungsleitungen von der Roboterbasis bis zu dem Trägerelement geführt. Dadurch sind sie zum einem vor Verunreinigung und Verschmutzung und zum anderen vor einer Beschädigung geschützt. Der oder die länglichen Hohlkörper sind an den Stirnseiten offen aber ansonsten vorzugsweise geschlossen, so dass weder von außen Verunreinigungen und Reinigungsflüssigkeiten in den länglichen Hohlkörper eindringen können noch Partikel wie beispielsweise Abrieb der Versorgungsleitungen nach außen dringen können. Damit sind die Versorgungsleitungen vor äußeren Einflüssen geschützt. Außerdem sind die zu bearbeitenden Gegenstände vor Verunreinigungen durch die Versorgungsleitungen geschützt. Ferner sind gegenüber einer Führung der Versorgungsleitungen entlang der Betätigungseinheiten die in dem länglichen Hohlkörper und dem hohlen Gelenk geführten Versorgungsleitungen in wesentlich geringerem Umfang dem Verschleiß unterworfen, da sie selbst bei einer Auslenkung des Trägerelements aus der Ausgangsposition nahezu geradlinig verlaufen oder nur um kleine Winkel gekrümmt werden.

Der längliche Hohlkörper kann beispielsweise als Komponenten mindestens zwei teleskopartig ineinander verschiebbare Rohre aufweisen. Diese sind ineinander verdrehsicher gelagert. Hierzu können die Rohre einen kreisrunden Querschnitt aufweisen. Dabei ist ein inneres Rohr mit radial nach außen abstehenden Wülsten ausgestattet, während das äußere Rohr Nuten aufweist, die an die Wülste angepasst sind. Wülste und Nuten verlaufen in Längsrichtung der Rohre. Darüber hinaus können die Rohre auch einen Querschnitt aufweisen, der von einer kreisrunden Form abweicht, beispielsweise ein ovaler oder ein eckiger Querschnitt. Der aus mindestens zwei teleskopartig ineinander angeordneten Rohren bestehende längliche Hohlkörper hat den Vorteil, dass er in seiner Länge variabel ist und sich dem variablen Abstand zwischen der Roboterbasis und dem Trägerelement anpasst. Der Abstand zwischen der Roboterbasis und dem Trägerelement ändert sich bei einer Bewegung der Betätigungseinheiten. Ferner können auch mit Rohren mit geringem Gewicht große Drehmomente übertragen werden. Es besteht jedoch auch die Möglichkeit, flexible Antriebswellen als längliche Hohlkörper einzusetzen. Diese sind ebenfalls als Hohlkörper ausgebildet und können somit die Versorgungsleitungen aufnehmen. Ferner kann der längliche Hohlkörper lediglich ein biegefestes Rohr aufweisen. Um dem variablen Abstand zwischen der Roboterbasis und dem Trägerelement Rechnung zu tragen, kann das Rohr an der Roboterbasis verschiebbar gelagert sein.

An den durchgängigen Hohlraum des länglichen Hohlkörpers schließt sich der Hohlraum des Gelenks an. Das innen hohle Gelenk weist mehrere Gelenkteile auf, die relativ zueinander beweglich sind. Diese sorgen für mehrere Freiheitsgrade des Gelenks, so dass der über das Gelenk mit dem Trägerelement verbundene längliche Hohlkörper der Bewegung des Trägerelements folgen kann. Das Trägerelement wird über die Betätigungseinheiten dreidimensional im Raum bewegt. Das Gelenk muss daher mindestens eine Bewegung in zwei Dimensionen gestatten. Eine Bewegung hinsichtlich einer dritten Dimension wird beispielsweise durch eine in Längsrichtung verschiebbare Anordnung des länglichen Hohlkörpers an der Roboterbasis oder durch eine längenvariable Ausgestaltung des länglichen Hohlkörpers ermöglicht. Die Gelenkteile weisen bevorzugt entweder einen durchgängigen Hohlraum auf oder sind um einen Hohlraum herum angeordnet. Sind die Gelenkteile ineinander angeordnet wie beispielsweise bei einem homokinetischen Gelenk oder Gleichlaufgelenk, so weist das innerste Gelenkteil einen Hohlraum auf, durch den die Versorgungsleitung hindurchgeführt wird. Die übrigen Gelenkteile sind um das innerste Gelenkteil herum angeordnet und engen den Hohlraum nicht ein. Sind die Gelenkteile nacheinander angeordnet, wie beispielsweise bei einem Kreuzgelenk oder Kardangelenk mit einem zentralen Gelenkteil und mit daran in verschiedene Richtungen ansetzenden gabelartigen Gelenkteilen, so schließen sich die Hohlräume der einzelnen Gelenkteile aneinander an. Gelenkteile, welche das Gelenk mit dem länglichen Hohlkörper und mit dem Trägerelement oder einem an dem Trägerelement angeordneten Greifer oder Werkzeug verbinden, sind ebenfalls hohl ausgebildet oder um einen Hohlraum herum angeordnet, so dass ein allen Gelenkteilen gemeinsamer durchgängiger Hohlraum entsteht oder eine Abfolge hintereinander angeordneter Hohlräume, die wiederum in der Summe einen gemeinsamen durchgängigen Hohlraum aller Gelenkteile für die Versorgungsleitungen ergeben. Dieser durchgängige Hohlraum verläuft in der Ausgangsstellung des Gelenks, in welchem das Gelenk nicht ausgelenkt ist, in axialer Richtung. In dieser Ausgangsstellung kann das Gelenk zwei parallel ausgerichtete, gedachte Wellen verbinden. Erst durch die Auslenkung des Gelenks werden die beiden Wellen abgewinkelt zueinander ausgerichtet. Bei dem mit dem länglichen Hohlkörper verbundenen Gelenk entspricht die axiale Richtung des Gelenks der Längsrichtung des länglichen Hohlkörpers und des Hohlraums des länglichen Hohlkörpers. In dieser Ausgangsstellung ist der längliche Hohlkörper vertikal ausgerichtet.

Der längliche Hohlkörper mit dem Gelenk an seinem dem Trägerelement zugewandten Ende kann verschiedene Funktionen haben:
Erstens nimmt er die Versorgungsleitungen für einen an dem Trägerelement angeordneten Greifer oder ein Werkzeug auf und führt diese von der Roboterbasis bis zu dem Trägerelement, an welchem ein Werkzeug oder ein Greifer, angeordnet ist. Vorteilhafterweise verläuft der Hohlraum in dem Gelenk in axialer Richtung. Können die Versorgungsleitungen in axialer Richtung entlang der Rotationsachse verlegt werden, wirkt auf sie kein oder allenfalls ein sehr geringes Drehmoment.
Zweitens kann er ein Drehmoment eines an der Roboterbasis angeordneten Rotationsantriebs auf einen an dem Trägerelement angeordneten Greifer oder auf ein am dem Trägerelement angeordnetes Werkzeug übertragen. In diesem Fall ist der längliche Hohlkörper als Drehmomentübertragungseinrichtung ausgebildet und drehbar mit dem Trägerelement verbunden, so dass das Drehmoment nicht auf das Trägerelement sondern auf einen Greifer oder ein Werkzeug an dem Trägerelement übertragen wird. Hierzu ist das Trägerelement bevorzugt mit einer Hohlwelle ausgestattet, welche drehbar an dem Trägerelement angeordnet ist. Der längliche Hohlkörper ist über das Gelenk und die Hohlwelle des Trägerelements mit einem Werkzeug oder einem Greifer verbunden. Um eine exakte Positionierung und Ausrichtung eines an dem Trägerelement angeordneten Greifers oder Werkzeugs zu gewährleisten, ist es wesentlich, dass sowohl der längliche Hohlkörper als auch das Gelenk exakte Drehwinkel ermöglichen.
Drittens kann er als Kraftübertragungseinrichtung eine Kraft in Längsrichtung auf das Trägerelement oder einen an dem Trägerelement angeordneten Greifer oder ein an dem Trägerelement angeordnetes Werkzeug übertragen und dabei entweder das Trägerelement, den Greifer oder das Werkzeug in eine der Roboterbasis entgegen gesetzte Richtung drücken. Um diese Aufgabe zu erfüllen, ist der Industrieroboter mit einem Antrieb oder Aktuator, beispielsweise mit einem Pneumatikzylinder oder einem Linearantrieb, beispielsweise einem Elektromotor, zur Erzeugung axial wirkender Kräfte ausgestattet. Dieser Antrieb oder Aktuator kann auch in dem länglichen Hohlköper angeordnet sein. Der längliche Hohlkörper und das Gelenk müssen biegesteif sein und dürfen unter den erzeugten Kräften keine Verformung erfahren. Derartige axial wirkende Kräfte sind insbesondere bei Seilrobotern von Bedeutung, bei denen die Seile auf diese Weise gespannt werden.

In bevorzugter Weise durchdringt der längliche Hohlkörper die Roboterbasis und das Trägerelement nicht. An seinem der Roboterbasis zugewandten Ende ist der längliche Hohlkörper beweglich auf der dem Trägerelement zugewandten Seite der Roboterbasis angeordnet. Hierzu kann ebenfalls ein hohles Gelenk vorgesehen sein, durch welches die Versorgungsleitungen geführt sind. Ferner ist der längliche Hohlkörper über ein hohles Gelenk beweglich mit dem Trägerelement an der der Roboterbasis zugewandten Seite des Trägerelements verbunden.

Nach einer vorteilhaften Ausgestaltung weist das Gelenk mehrere relativ zueinander bewegliche Gelenkteile auf, von denen ein erstes Gelenkteil mit dem länglichen Hohlkörper verbunden ist, und von denen ein zweites Gelenkteil mit dem Trägerelement oder einem an dem Trägerelement angeordneten Werkzeug oder Greifer verbunden ist. Dabei sind das erste und das zweite Gelenkteil beweglich miteinander verbunden. Das erste Gelenkteil und das zweite Gelenkteil sind mit einem Hohlraum ausgestattet und/ oder um einen Hohlraum herum angeordnet, so dass ein gemeinsamer durchgängiger Hohlraum oder eine räumliche Abfolge hintereinander angeordneter durchgängiger Hohlräume gegeben ist. Die hintereinander angeordneten Hohlräume ergeben in der Summe ebenfalls einen gemeinsamen Hohlraum aller Gelenkteile. Durch diesen gemeinsamen Hohlraum der Gelenkteile sind die Versorgungsleitungen hindurchgeführt.

Nach einer weiteren vorteilhaften Ausgestaltung der Erfindung sind das erste und das zweite Gelenkteil über mindestens ein drittes Gelenkteil miteinander verbunden. Dabei ist das mindestens eine dritte Gelenkteil mit einem Hohlraum ausgestattet und/ oder um einen Hohlraum herum angeordnet. Dieser Hohlraum des dritten Gelenkteils bildet zusammen mit den Hohlräumen des ersten und zweiten Gelenkteils einen gemeinsamen durchgängigen Hohlraum des Gelenks, durch den die Versorgungsleitungen hindurchgeführt sind.

Nach einer weiteren vorteilhaften Ausgestaltung der Erfindung ist das Gelenk ein Kardangelenk, das ein mit gekreuzten Achsen oder Achsstummelpaaren ausgestattetes zentrales rohr- oder ringförmiges Gelenkteil aufweist. Ein Kardangelenk wird aufgrund der sich kreuzenden Achsen auch als Kreuzgelenk bezeichnet. Bei dem zentralen ring- oder rohrförmigen Gelenkteil kann es sich gemäß der oben angegebenen Unterscheidung zwischen erstem, zweitem und dritten Gelenkteil um ein drittes Gelenkteil handeln, welches einen durchgängigen Hohlraum aufweist. Das ring- oder rohrförmige Gelenkteil kann im Querschnitt rund oder eckig sein. Eine erste Achse oder ein erstes Achsstummelpaar der gekreuzten Achsen verläuft mit seiner Drehachse durch das zentrale Gelenkteil und ist in oder an einem ersten mit dem länglichen Hohlkörper verbundenen Gelenkteil gelagert. Eine zweite Achse oder ein zweites Achsstummelpaar der gekreuzten Achsen verläuft ebenfalls mit seiner Drehachse durch das zentrale Gelenkteil und ist in oder an einem zweiten mit dem Trägerelement verbundenen Gelenkteil gelagert. Als erstes Gelenkteil können beispielsweise an dem länglichen Hohlkörper zungenförmige Achsenaufnahmen angeordnet sein, die in Längsrichtung an den länglichen Hohlkörper vorstehen. Entsprechendes gilt für das zweite Gelenkteil im Bezug auf das Trägerelement. Das erste Gelenkteil kann einstückig mit dem länglichen Hohlkörper ausgebildet sein oder als separates Bauteil ausgebildet sein, welches mit dem länglichen Hohlkörper verbunden ist. Ebenso kann das zweite Gelenkteil einstückig mit dem Trägerelement ausgebildet sein oder als separates Bauteil mit dem Trägerelement verbunden sein.

Nach einer weiteren vorteilhaften Ausgestaltung der Erfindung ist das Gelenk ein Kardangelenk oder Kreuzgelenk, welches mindestens zwei Ringe oder Rohre als Gelenkteile aufweist. Diese Ringe oder Rohre sind über gekreuzte Achsen drehbar miteinander und mit dem länglichen Hohlkörper und/ oder dem Trägerelement verbunden. So kann beispielsweise der längliche Hohlkörper an seinem dem Trägerelement zugewandten Ende mit einem ersten Ring um eine erste Achse drehbar verbunden sein, wobei die erste Achse senkrecht zur Längsrichtung des länglichen Hohlkörpers ausgerichtet ist. Der erste Ring kann beispielsweise innerhalb des länglichen Hohlkörpers drehbar angeordnet sein. Der erste Ring entspricht gemäß der oben angegebenen Unterscheidung zwischen dem ersten und zweiten Gelenkteil dem ersten Gelenkteil. Innerhalb dieses ersten Rings ist ein zweiter Ring an dem ersten Ring um eine zweite Achse drehbar angeordnet. Dabei kreuzen sich erste und zweite Achse. Der zweite Ring ist mit dem Trägerelement verbunden. Er entspricht gemäß der oben angegebenen Unterscheidung zwischen erstem und zweitem Gelenkteil dem zweiten Gelenkteil. Der erste Ring kann auch an der Außenseite des länglichen Hohlkörpers angeordnet sein. Die Ringe oder Rohre weisen bevorzugt einen runden Querschnitt auf.

Nach einer weiteren vorteilhaften Ausgestaltung der Erfindung ist das Gelenk ein Gleichlaufgelenk, bei dem das innere Gelenkteil einen durchgängigen Hohlraum aufweist, der das Gelenkteil vollständig durchdringt. Die übrigen Gelenkteile sind um das innere Gelenkteil herum angeordnet. Gleichlaufgelenke werden auch als homokinetische Gelenke bezeichnet.

Nach einer welteren vorteilhaften Ausgestaltung der Erfindung ist das Trägerelement mit einer drehbar in dem Trägerelement gelagerten Hohlwelle ausgestattet. Die Hohlwelle ist an ihrem dem länglichen Hohlkörper zugewandten Ende mit dem hohlen Gelenk und an ihrem dem länglichen Hohlkörper abgewandten Ende mit einem Werkzeug oder Greifer verbunden.

Nach einer vorteilhaften Ausgestaltung der Erfindung ist der Industrieroboter mit einem innen hohl ausgebildeten zweiten Gelenk mit mehreren Freiheitsgraden ausgestattet, über welches der längliche Hohlkörper mit der Roboterbasis oder einen an der Roboterbasis angeordneten Antrieb verbunden ist. Dabei sind die Versorgungsleitungen durch das zweite Gelenk hindurchgeführt. Damit sind die Versorgungsleitungen auch beim Übergang von dem länglichen Hohlkörper zur Roboterbasis komplett nach außen abgeschirmt. Das zweite Gelenk weist ebenso wie das zwischen dem Trägerelement und dem länglichen Hohlkörper angeordnete erste Gelenk mehrere relativ zueinander bewegliche Gelenkteile auf. Ferner kann das zweite Gelenk beispielsweise als Kardangelenk oder Gleichlaufgelenk ausgebildet sein. Die obigen Ausführungen zu dem ersten Gelenk gelten entsprechend.

Nach einer weiteren vorteilhaften Ausgestaltung der Erfindung ist der längliche Hohlkörper zusammen mit dem oder den Gelenken an seinen Enden als Gelenkwelle mit Längenausgleich zur Übertragung von Drehmomenten von einem an der Roboterbasis angeordneten Rotationsantrieb auf einen an dem Trägerelement angeordneten Greifer oder auf ein an dem Trägerelement angeordnetes Werkzeug ausgebildet.

Nach einer weiteren vorteilhaften Ausgestaltung der Erfindung ist der mindestens eine längliche Hohlkörper biegesteif. Auf diese Weise findet keine Verformung des länglichen Hohlkörpers statt. Ferner können durch den länglichen Hohlkörper durch einen zusätzlichen Antrieb Kräfte auf das Trägerelement oder einen an dem Trägerelement angeordneten Greifer oder ein Werkzeug übertragen werden.

Nach einer weiteren vorteilhaften Ausgestaltung der Erfindung ist in dem länglichen Hohlkörper mindestens ein pneumatisches oder hydraulisches Steuerelement angeordnet zur Betätigung eines an dem Trägerelement angeordneten Greifers oder Werkzeugs. Ein derartiges Steuerelement umfasst beispielsweise eines oder mehrere Ventile. Aufgrund der Position in dem länglichen Hohlkörper befindet sich das Steuerelement näher an einem Greifer oder Werkzeug als bei einer Positionierung des Steuerelements an der Roboterbasis. Je näher die pneumatische oder hydraulische Steuerung an dem Greifer oder dem Werkzeug angeordnet ist, um so kürzer ist der Weg, den die Druckluft oder eine Druckflüssigkeit zum Bewegen des Greifers oder des Werkzeugs von der Steuerung bis zum Greifer oder zum Werkzeug zurückzulegen hat. Dies führt zu kurzen Reaktionszeiten. Die Ventile der pneumatischen oder hydraulischen Steuerung werden durch elektrische Signale ausgelöst, deren Ausbreitungsgeschwindigkeit wesentlich größer ist als die Geschwindigkeit von Druckluft oder von einer Druckflüssigkeit Der längliche Hohlkörper schirmt die pneumatische oder hydraulische Steuerung nach außen ab und dient als Gehäuse. Der längliche Hohlkörper verhindert damit, dass die pneumatische oder hydraulische Steuerung mit den zu bewegenden oder zu bearbeitenden Gegenständen in Kontakt treten kann. Die Steuerung muss daher keine besonderen Anforderungen hinsichtlich der Hygiene erfüllen.

Nach einer weiteren vorteilhaften Ausgestaltung der Erfindung ist die in dem länglichen Hohlkörper angeordnete Versorgungsleitung zumindest abschnittsweise schrauben- oder spiralförmig aufgewickelt. Sie kann damit der Längenverstellung der Einrichtung folgen. Die schrauben- oder spiralförmige Wicklung wird bei einer Vergrößerung des Abstands zwischen der Roboterbasis und dem Trägerelement auseinander gezogen und bei einer Verkleinerung des Abstands zusammengedrückt. Die Wicklung ist dabei bevorzugt um die zentrale Längsachse des länglichen Hohlkörpers. Der Durchmesser der Wicklung ist dabei bevorzugt kleiner als der Innendurchmesser des länglichen Hohlkörpers.

Die Aufgabe wird außerdem durch den erfindungsgemäßen Industrieroboter mit den Merkmalen des Anspruchs 17 gelöst. Der Industrieroboter zeichnet sich dadurch aus, dass er mit mindestens einer hohl ausgebildeten Betätigungseinhelt ausgestattet ist. Diese Betätigungseinheit in Form eines Steuerarms weist einen oberen und einen unteren Armabschnitt mit jeweils einem durchgängigen Hohlraum auf. Ferner ist die Betätigungseinheit mit einem Gelenk zwischen den beiden Armabschnitten ausgestattet, das einen durchgängigen Hohlraum aufweist. Das Gelenk zwischen dem unteren Armabschnitt und dem Trägerelement weist ebenfalls einen durchgängigen Hohlraum auf. Dabei schließen sich die Hohlräume der Armabschnitte und der Gelenke aneinander an und bilden einen durchgehenden Kanal von der Roboterbasis bis zu dem Trägerelement. In diesen durchgängigen Hohlräumen ist mindestens eine Versorgungsleitung angeordnet und von der Roboterbasis bis zu dem Trägerelement geführt. Dadurch ist die Versorgungsleitung vor Verunreinigung und Verschmutzung und zum anderen vor einer Beschädigung geschützt. Die Armabschnitte und die Gelenke der hohlen Betätigungseinheit sind an den Stirnseiten offen aber ansonsten vorzugsweise geschlossen, so dass weder von außen Verunreinigungen und Reinigungsflüssigkeiten in den länglichen Hohlkörper eindringen können noch Partikel wie beispielsweise Abrieb der Versorgungsleitungen nach außen dringen können. Damit sind die Versorgungsleitungen vor äußeren Einflüssen geschützt. Außerdem sind die zu bearbeitenden Gegenstände vor Verunreinigungen durch die Versorgungsleitungen geschützt. Ferner sind gegenüber einer Führung der Versorgungsleitungen entlang der Betätigungseinheiten die in der mindestens einen hohlen Betätigungseinheit geführten Versorgungsleitungen in wesentlich geringerem Umfang dem Verschleiß unterworfen.

Nach einer vorteilhaften Ausgestaltung der Erfindung ist der obere Armabschnitt der hohl ausgebildeten Betätigungseinheit als Hohlkörper ausgebildet. Der untere Armabschnitt weist mindestens einen Hohlkörper auf. Typischerweise besteht der untere Armabschnitt aus zwei parallel angeordneten Rohren. Dabei ist es ausreichend, wenn eines der beiden Rohre ein Hohlkörper ist.

Nach einer weiteren vorteilhaften Ausgestaltung der Erfindung ist das hohle Gelenk ein Kardangelenk, das ein mit gekreuzten Achsen oder Achsstummelpaaren ausgestattetes zentrales rohr- oder ringförmiges Gelenkteil aufweist. Eine erste Achse oder ein erstes Achsstummelpaar ist in oder an einem ersten mit einem Armabschnitt verbundenen Gelenkteil gelagert. Eine zweite Achse oder ein zweites Achsstummelpaar ist in oder an einem zweiten mit dem anderen Armabschnitt oder mit dem Trägerelement verbundenen Gelenkteil gelagert. Erstes und zweites Gelenkteil sind ebenfalls als Hohlkörper ausgebildet. Sie können ferner einstückig mit dem zugehörigen Armabschnitt oder Trägerelement ausgebildet sein.

Nach einer weiteren vorteilhaften Ausgestaltung der Erfindung ist das hohle Gelenk ein Kardangelenk, welches als Gelenkteile zwei Ringe oder Rohre aufweist, die über gekreuzte Achsen drehbar miteinander verbunden sind. Einer der beiden Ringe oder Rohre ist mit einem Armabschnitt und der andere Ring oder das andere Rohr mit dem anderen Armabschnitt oder mit dem Trägerelement verbunden.

Nach einer weiteren vorteilhaften Ausgestaltung der Erfindung ist das Gelenk (71, 72) ein Gleichlaufgelenk, bei dem das innere Gelenkteil einen Hohlraum aufweist. Dieser Hohlraum durchdringt das innere Gelenkteil vollständig.

Weitere Vorteile und vorteilhafte Ausgestaltungen der Erfindung sind der nachfolgenden Beschreibung, der Zeichnung und den Ansprüchen zu entnehmen.

### Zeichnung

In der Zeichnung ist ein Ausführungsbeispiel der Erfindung dargestellt und im folgenden näher beschrieben. Es zeigen:
- Figur 1: erstes Ausführungsbeispiel eines Industrieroboters nach dem Delta-Prinzip in Schnittdarstellung,
- Figur 2: Industrieroboter gemäß Figur 1 ohne Greifer, mit schematisch dargestellten Betätigungseinheiten und mit vertikal ausgerichtetem länglichen Hohlkörper,
- Figur 3: Industrieroboter gemäß Figur 1 ohne Greifer, mit schematisch dargestellten Betätigungseinheiten und mit aus der Vertikalen ausgelenktem länglichen Hohlkörper,
- Figur 4: Gelenk des Industrieroboters gemäß Figur 1 in Schnittdarstellung,
- Figur 5: Schnitt durch den länglichen Hohlkörper des Industrieroboters gemaß Figur 1 entlang der in Figur 2 mit A - A gekennzeichneten Ebene,
- Figur 6: Schnitt durch den länglichen Hohlkörper des Industrieroboters gemäß Figur 1 entlang der in Figur 2 mit B - B gekennzeichneten Ebene,
- Figur 7: Schnitt durch den länglichen Hohlkörper des Industrieroboters gemäß Figur 1 entlang der in Figur 2 mit C - C gekennzeichneten Ebene,
- Figur 8: unterer Armabschnitt einer Betätigungseinheit des Industrieroboters gemäß Figur 1 in perspektivischer Darstellung,
- Figur 9: zweites Ausführungsbeispiel eines Industrieroboters mit Seilen als Betätigungseinheiten in perspektivischer Darstellung,
- Figur 10: Industrieroboter gemäß Figur 8 im Längsschnitt,
- Figur 11: drittes Ausführungsbeispiel eines Industrieroboters mit Seilen als Betätigungseinheiten im Längsschnitt,
- Figur 12: Kreuzgelenk für einen Industrieroboter gemäß Figuren 1, 9 und 11 in verschiedenen Ansichten,
- Figur 13: viertes Ausführungsbeispiel eines Industrieroboters im Längsschnitt.

### Beschreibung des Ausführungsbeispiels

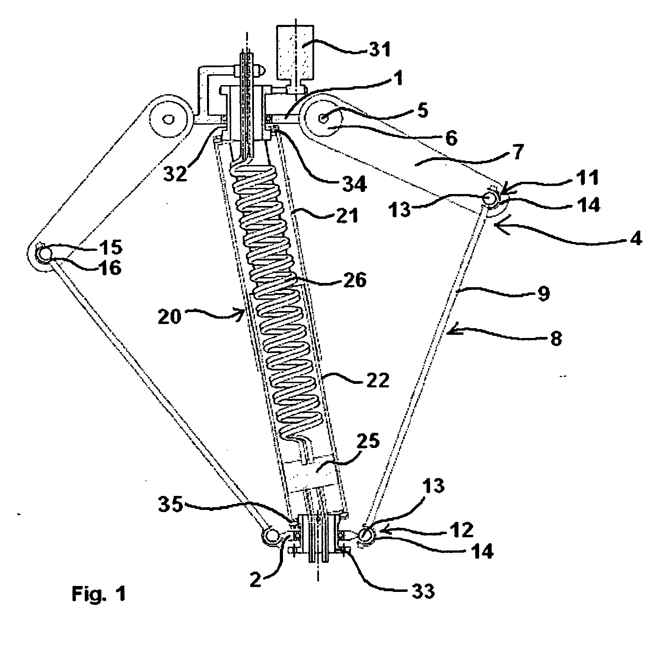

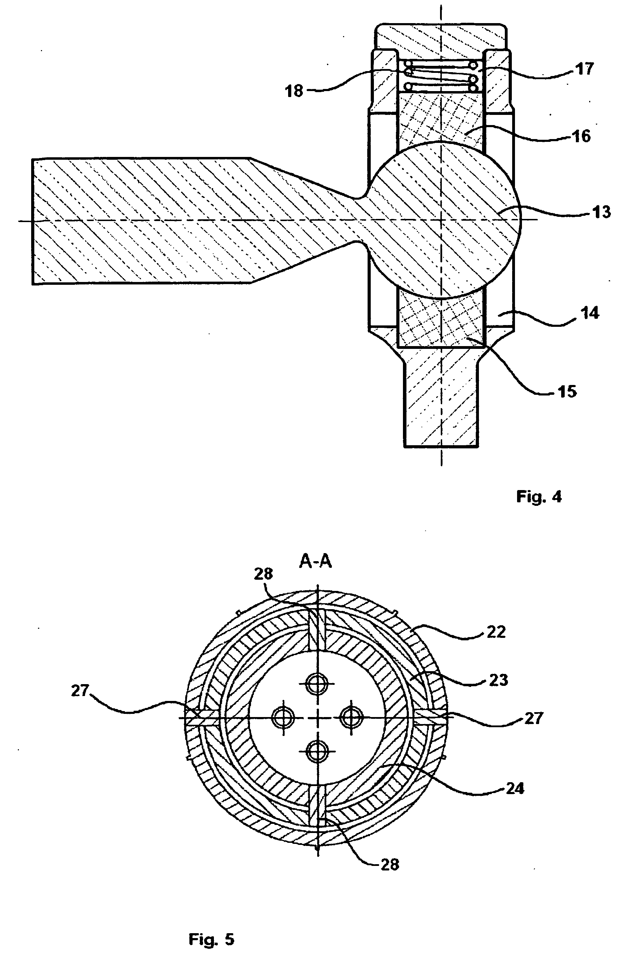

In Figur 1 ist ein erstes Ausführungsbeispiel eines Industrieroboters nach dem Delta-Prinzip mit einer Roboterbasis 1, einem Trägerelement 2, an welchem ein Greifer oder ein Werkzeug angeordnet werden kann, und zwei als Steuerarme ausgebildete Betätigungseinheiten 4 dargestellt. Der Greifer und das Werkzeug sind in der Zeichnung nicht gezeigt. Der Industrieroboter weist insgesamt drei als Steuerarme ausgebildete Betätigungseinheiten 4 auf, jedoch ist eine der Betätigungseinheiten in der Darstellung nicht erkennbar. Jeder der drei Betätigungseinheiten ist über eine Antriebswelle 5 mit einem Motor 6 verbunden. Die Betätigungseinheiten 4 weisen einen oberen Armabschnitt 7 und einem unteren Armabschnitt 8 auf. Dabei zeichnet sich der obere Armabschnitt 7 durch eine hohe Stabilität und ein geringes Gewicht aus. Der untere Armabschnitt 8 weist zwei parallel verlaufende Stangen 9 und 10 auf. In der Zeichnung ist jeweils nur eine der beiden Stangen einer Betätigungseinheit 4 erkennbar. Die beiden Stangen 9 und 10 des unteren Armabschnitts 8 einer Betätigungseinheit 4 sind über Gelenke 11 an ihrem oberen Ende mit dem oberen Armabschnitt 7 der Betätigungseinheit 4 und über Gelenke 12 mit dem Trägerelement 2 verbunden. Die Gelenke 11 stimmen mit den Gelenken 12 überein. Ein derartiges Gelenk ist in Figur 4 im Schnitt dargestellt. Jedes der Gelenke 11 und 12 weist einen kugelförmigen Gelenkkopf 13 auf. Dieser Gelenkkopf ist bei den Gelenken 11 am oberen Armabschnitt 7 und bei den Gelenken 12 am Trägerelement 2 angeordnet. Hierzu ist ein Verbindungsstück an dem Gelenkkopf 13 vorgesehen. Ferner weisen die Gelenke 11 und 12 einen Ring 14 auf, in welchem zwei zylinderförmige Aufnahmeelemente 15 und 16 angeordnet sind. Der Ring ist in Figur 1 zur besseren Übersichtlichkeit der Zeichnung nur teilweise dargestellt. Er kann geschlossen sein oder eine Öffnung wie in Figur 1 aufweisen. An ihrer dem kugelförmigen Gelenkkopf zugewandten Stirnseite weisen die beiden Aufnahmeelemente 15 und 16 eine Form auf, die einen Teil einer Kugelschale darstellt Der Radius dieser Kugelschale ist an den Radius des kugelförmigen Gelenkkopfs 13 angepasst. Das Aufnahmeelement 15 ist in dem Ring 14 starr angeordnet. Das Aufnahmeelement 16 ist in einer Aufnahme 17 In radialer Richtung bezogen auf den Radius des kugelförmigen Gelenkkopfs 13 verschiebbar geführt. Es wird über eine Schraubenfeder 18 an den kugelförmigen Gelenkkopf 13 gedrückt. Anstelle einer Schraubenfeder kann hierfür auch eine Tellerfeder eingesetzt werden. Über das In der Aufnahme 17 verschiebbar geführte Aufnahrneelement 16 und die durch die Schraubenfeder 18 auf das Aufnahmeelement 16 ausgeübte Kraft können Fertigungstolerarizen des Gelenkkopfs 13, der Aufnahmeelemente 15 und 16 sowie eine Abnutzung der betreffenden Teile ausgeglichen werden. Damit ist gewährleistet, dass der Gelenkkopf in den Aufnahmeelementen beweglich und ohne Spiel gelagert ist. Der Gelenkkopf 13 und die beiden Aufnahmeelemente 15 und 16 sind hinsichtlich ihres Materials und ihrer Oberflächen derart ausgestaltet, dass sich die Aufnahmeelemente 15 und 16 relativ zum Gelenkkopf 13 bewegen können und dabei entlang der Oberfläche des Gelenkkopfs 13 gleiten. Hierbei tritt nur geringe Reibung auf, was die Abnutzung minimiert. Dank der Gelenke 11 und 12 können sich die unteren Armabschnitte 8 relativ zu den oberen Armabschnitten 7 sowie relativ zum Trägerelement 2 drehen. Um dabei eine Drehung der Stangen 9 und 10 um ihre Längsachse zu vermeiden, sind die beiden Stangen 9 und 10 eines unteren Armabschnitts 8 über ein Brückenelement 19 miteinander verbunden. Die Brückenelemente 19 bestehen aus einem starren Material. Sie sind jedoch beweglich mit den beiden Stangen 9 und 10 verbunden.

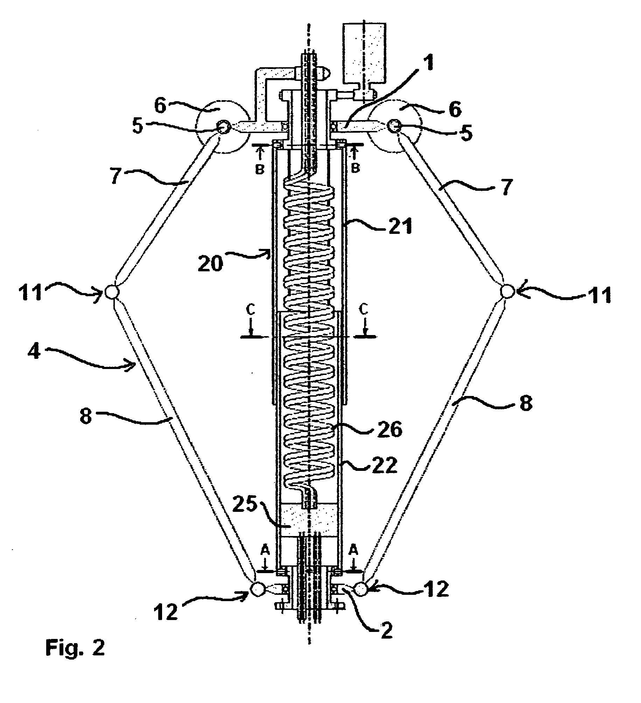

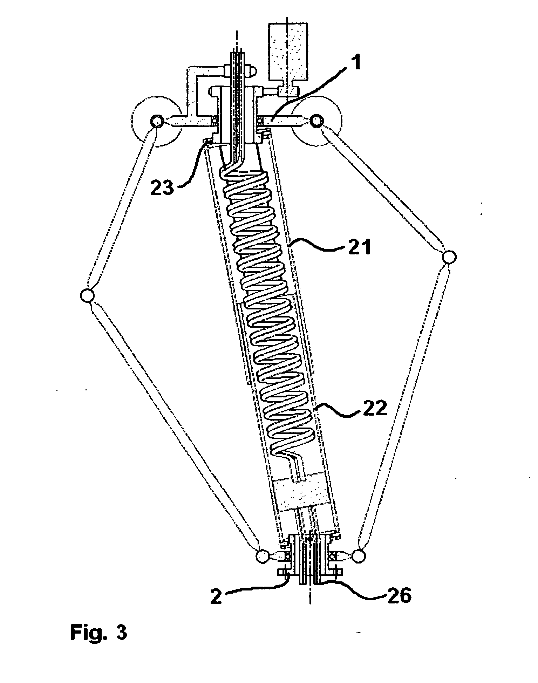

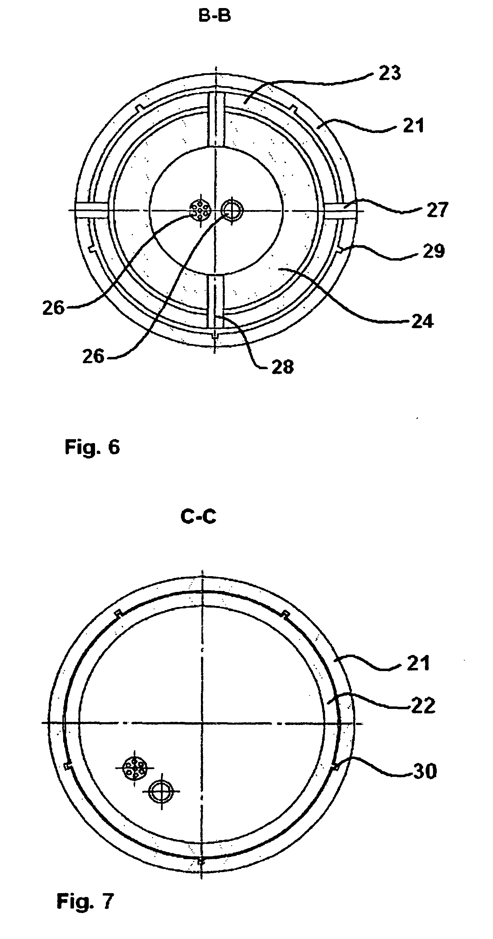

Der Industrieroboter ist ferner mit einem länglichen Hohlkörper 20 ausgestattet. Er dient dazu, ein Drehmoment eines an der Roboterbasis 1 angeordneten Rotationsantriebs 31 auf einen in der Zeichnung nicht dargestellten Greifer oder ein nicht dargestelltes Werkzeug an dem Trägerelement zu übertragen. Der längliche Hohlkörper 20 weist zwei ineinander verschiebbare, teleskopartig angeordnete Rohre 21 und 22 auf. Durch die verschiebbare Lagerung können Abstandsänderungen zwischen der Roboterbasis 1 und dem Trägerelement 2 bei einer Bewegung der Betätigungseinheiten 4 ausgeglichen werden. Das obere Rohr 21 ist über ein erstes Kardangelenk 34 beweglich mit der Roboterbasis 1 verbunden. Das erste Kardangelenk 34 weist zwei Ringe 23 und 24 auf, welche um senkrecht zueinander verlaufende Achsen 27 und 28 drehbar angeordnet sind. Der erste Ring 23, der zweite Ring 24, die erste Achse 27 und die zweite Achse 28 sind in der Schnittdarstellung gemäß Figur 7 erkennbar. Über ein entsprechendes zweites Kardangelenk 35 ist das untere Rohr 22 des länglichen Hohlkörpers 20 beweglich mit dem Trägerelement 2 verbunden. Dies ist in Figur 5 dargestellt. Durch die beiden Kardangelenke 34, 35 kann der längenverstellbare längliche Hohlkörper 20 einer Auslenkung des Trägerelements 2 relativ zur Roboterbasis 1 aus der in Figur 1 und 2 dargestellten Ausgangspositionen folgen. Eine derartige Auslenkung ist in Figur 3 dargestellt.

Die Roboterbasis 1 ist mit einer an der Roboterbasis 1 drehbar gelagerten ersten Hohlwelle 32 ausgestattet. Das dem länglichen Hohlkörper 20 abgewandte Ende der ersten Hohlwelle 32 ist mit dem Rotationsantrieb 31 verbunden. Das dem länglichen Hohlkörper 20 zugewandte Ende der ersten Hohlwelle 32 ist mit dem ersten Kardangelenk 34 verbunden. Die erste Hohlwelle 32 sorgt dafür, dass das Drehmoment durch die Roboterbasis hindurch auf den länglichen Hohlkörper 20 übertragen wird. Ferner ist das Trägerelement 2 mit einer an dem Trägerelement drehbar gelagerten zweiten Hohlwelle 33 ausgestattet. Das dem länglichen Hohlkörper 20 zugewandte Ende der zweiten Hohlwelle ist mit dem zweiten Kardangelenk 35 verbunden. Das dem länglichen Hohlkörper 20 abgewandte Ende kann mit einem in der Zeichnung nicht dargestellten Greifer oder Werkzeug verbunden werden. Die beiden Hohlwellen 32, 33 sind rohrförmig ausgebildet und weisen in axialer Richtung einen durchgängigen Hohlraum auf, durch den die Versorgungsleitungen hindurchgeführt sind. Dank der beiden Hohlwellen 32 und 33 ist der längliche Hohlkörper 20 sowohl gegenüber der Roboterbasis als auch gegenüber dem Trägerelement drehbar. Der längliche Hohlkörper 20 durchdringt die Roboterbasis 1 und das Trägerelement 2 nicht. Er reicht lediglich von der dem Trägerelement 2 zugewandten Seite der Roboterbasis 1 bis zu der der Roboterbasis 1 zugewandten Seite des Trägerelements 2.

In den Rohren 21 und 22 des länglichen Hohlkörpers 20 ist eine Ventilsteuerung 25 mit mehreren Ventilen zur pneumatischen oder hydraulischen Steuerung eines Greifers oder Werkzeugs angeordnet. Ferner sind in den Rohren 21 und 22 der längenverstellbaren Einrichtung 20 die Versorgungsleitungen 26 für die Zuleitung und Ableitung von Druckluft oder Druckflüssigkeit zu der Ventilsteuerung 25 und dem Greifer oder Werkzeug angeordnet. Damit die Versorgungsleitungen 26 einer Längenänderung der längenverstellbaren Einrichtung 20 folgen können, sind die Versorgungsleitungen schraubenförmig gewickelt. Bei einer Längenveränderung des länglichen Hohlkörpers 20 werden die Windungen der schraubenförmigen Wicklung auseinander gezogen oder zusammengedrückt.

Die Figuren 2 und 3 zeigen den Deltaroboter im Längsschnitt ähnlich wie Figur 1, jedoch sind im Unterschied zur Figur 1 die Roboterbasis 1, das Trägerelement 2 und die Betätigungseinheiten 4 lediglich schematisch dargestellt. Die Figuren 2 und 3 zeigen in erster Linie die Ausrichtung des längenvariablen länglichen Hohlkörpers 20. Dabei zeigt Figur 2 die Ausgangsposition, in der sich das Trägerelement 2 direkt unter der Roboterbasis 1 befindet und der längliche Hohlkörper 20 mit seinen beiden Rohren 21 und 22 in Längsrichtung vertikal ausgerichtet ist. Figur 3 zeigt dagegen eine aus dieser Ausgangsposition ausgelenkte Position des Trägerelements 2, welche durch eine Bewegung der Betätigungseinheiten 4 ausgelöst wird. Die dargestellte Auslenkung des Trägerelements 2 führt zwar nicht zu einer Verlängerung des länglichen Hohlkörpers 20, jedoch zu einem Verkippen um einen Winkel von 15° gegenüber der in Figur 2 dargestellten vertikalen Ausrichtung. Dank der Kardangelenke 34 und 35 mit den Ringen 23 und 24 am unteren und oberen Ende des längenverstellbaren länglichen Hohlkörpers 20 ist das Verkippen möglich, ohne dass dabei die Roboterbasis 1 und das Trägerelement 2 ihre Ausrichtung gegenüber der Horizontalen beziehungsweise Vertikalen ändern. Die Versorgungsleitungen 26 bestehen aus einem flexiblen Material. Sie können daher der Bewegung des längenverstellbaren länglichen Hohlkörpers 20 relativ zur Roboterbasis 1 und zum Trägerelement 2 folgen. Sie werden beispielsweise beim Übergang von dem unteren Rohr 22 zum Trägerelement 2 gekrümmt.

Figur 5 zeigt einen Querschnitt durch den länglichen Hohlkörper 20 am unteren Ende des Rohrs 22 des länglichen Hohlkörpers 20 im Bereich des zweiten Kardangelenks 35. In der Schnittdarstellung sind die beiden Ringe 23 und 24 des Kardangelenks 35 erkennbar. Dabei ist der erste Ring 23 über eine erste Achse 27 drehbar mit dem Rohr 22 verbunden. Ferner ist der zweite Ring 24 über eine zweite Achse 28 mit dem ersten Ring 23 verbunden. An der Außenseite des Rohrs 22 sind die in Längsrichtung verlaufenden Wülste 30 erkennbar, welche der Verdrehsicherung zwischen dem Rohr 21 und dem Rohr 22 dienen.

Figur 6 zeigt einen entsprechenden Querschnitt durch den länglichen Hohlkörper 20 am oberen Ende des Rohrs 21 im Bereich des ersten Kardangelenks 34. In der Schnittdarstellung sind die beiden Ringe 23 und 24 des Kardangelenks 34 erkennbar. Dabei ist der erste Ring 23 über eine erste Achse 27 drehbar mit dem Rohr 21 verbunden. Ferner ist der zweite Ring 24 über eine zweite Achse 28 mit dem ersten Ring 23 verbunden. Da die beiden Kardangelenke 34 und 35 identisch aufgebaut sind, haben die Ringe und Achsen dieselben Bezugszahlen. An der Innenseite des Rohrs 21 sind die in Längsrichtung verlaufenden Nuten 29 erkennbar, welche der Verdrehsicherung zwischen dem Rohr 21 und dem Rohr 22 dienen.

Figur 7 zeigt den länglichen Hohlkörper 20 im Querschnitt in dem Bereich, in dem sich die beiden Rohes 21 und 22 überlappen. In dieser Darstellung sind die radial nach außen abstehenden Wülste 30 an der Außenseite des Rohrs 22 erkennbar, welche in die Nuten 29 des Rohrs 21 eingreifen. Nuten 29 und Wülste 30 bilden zusammen die Verdrehsicherung, welche verhindert, dass sich das Rohr 21 und das Rohr 22 relativ zueinander drehen können. In den Schnittdarstellungen gemäß Figur 5, 6 und 7 sind außerdem die Versorgungsleitungen 26 erkennbar.

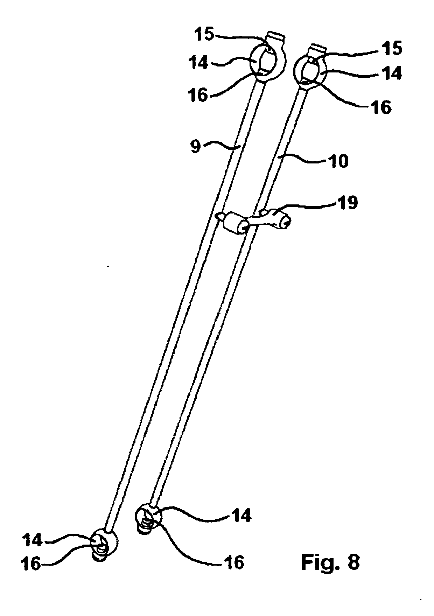

Figur 8 zeigt einen unteren Armabschnitt 8 einer Betätigungseinheit 4 in perspektivischer Darstellung. Der untere Armabschnitt weist die beiden Stangen 9 und 10 auf, die mit Teilen der Gelenke an ihrem oberen und unteren Ende und mit dem Brückenelement 19 ausgestattet sind. Das Brückenelement verbindet die beiden Stangen 9 und 10 miteinander. An den oberen und unteren Enden der Stangen 9 und 10 sind als Teile der Gelenke die Ringe 14 mit den Aufnahmeelementen 15 und 16 angeordnet. Die kugelförmigen Gelenkköpfe 13 der Gelenke 11 und 12 sind an den oberen Armabschnitten und an dem Trägerelement 2 angeordnet. Die Gelenkköpfe 13 sind in den Figuren 1 und 4 erkennbar.

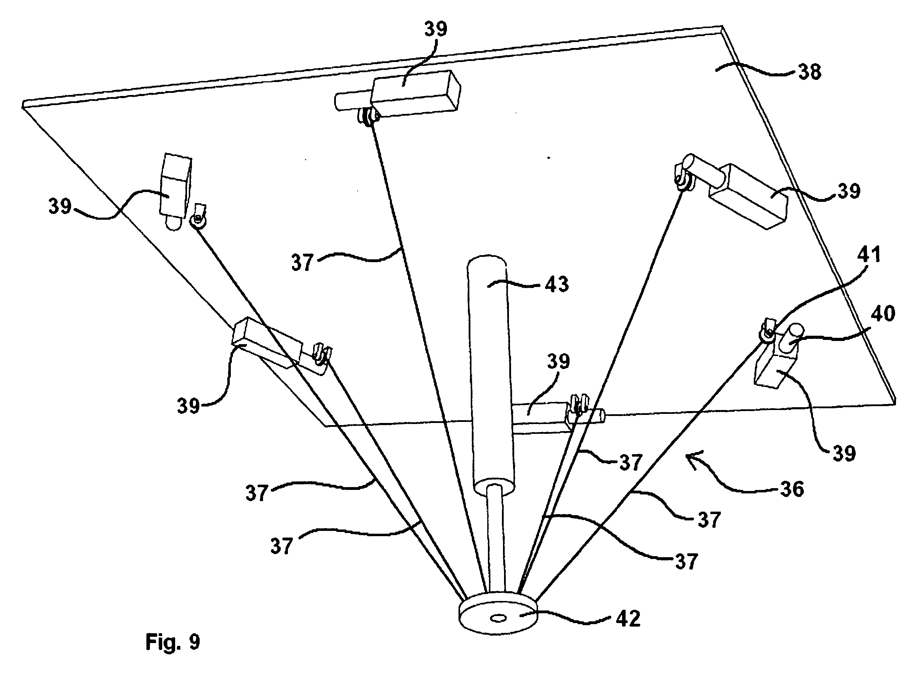

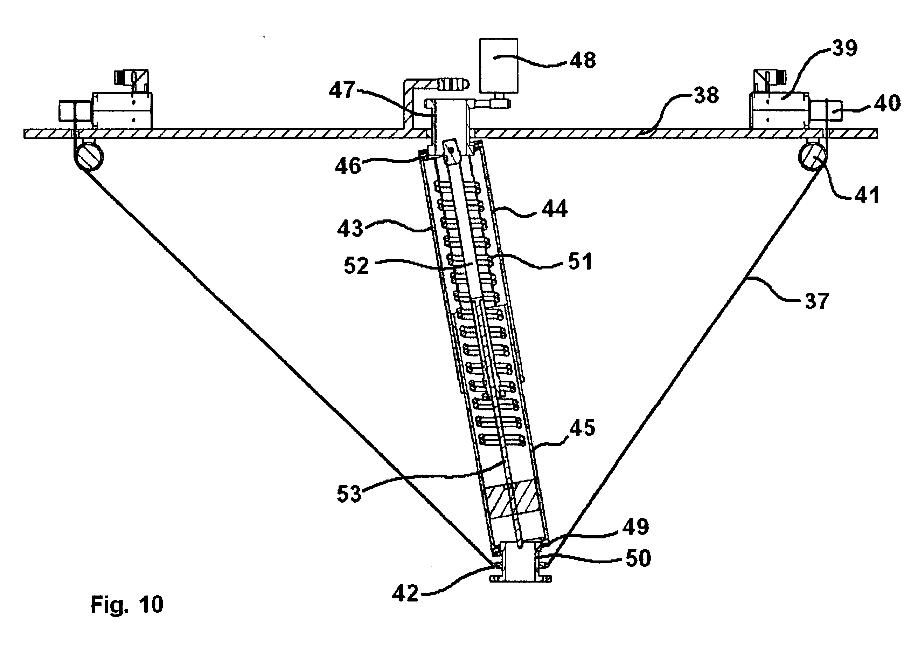

In den Figuren 9 und 10 ist ein zweites Ausführungsbeispiel eines Industrieroboters dargestellt, bei dem im Unterschied zu dem ersten Ausführungsbeispiel die Betätigungseinheiten 36 Seile 37 aufweisen. An einer Roboterbasis 38 sind insgesamt sechs Rotationsantriebe 39 angeordnet. In der Darstellung gemäß Figur 9 befinden sich die Rotationsantriebe 39 an der Unterseite der Roboterbasis 38. In der Darstellung gemäß Figur 10 befinden sich die Rotationsantriebe 39 an der Oberseite der Roboterbasis 38. An einer Welle 40 eines Rotationsantriebs 39 ist ein Seil 37 mit seinem einen Ende befestigt. Das Seil 37 wird je nach Rotationsrichtung des zugehörigen Rotationsantriebs 39 auf die Welle 40 aufgewickelt oder von der Welle angewickelt. Das Seil 37 ist über eine ebenfalls an der Roboterbasis 38 angeordnete Rolle 41 geführt. Mit seinem unteren Ende ist das Seil an einem Trägerelement 42 befestigt. An dem Trägerelement 42 kann ein Greifer oder ein Werkzeug angeordnet werden. Greifer und Werkzeug sind in der Zeichnung nicht dargestellt. Ein länglicher Hohlkörper 43 ist zwischen der Roboterbasis 38 und dem Trägerelement 42 angeordnet. Über eine in der Zeichnung nicht dargestellte Steuerung werden die insgesamt sechs Rotationsantriebe 39 gesteuert und geben einen bestimmten Seilabschnitt frei. Durch den länglichen Hohlkörper 43 wird das Trägerelement 42 nach unten gedrückt und die Seile 37 damit gespannt. Durch die aufeinander abgestimmten Rotationsantriebe 39, die Seile 37 und den länglichen Hohlkörper 43 erfolgt damit eine Bewegung des Trägerelements 42 im Raum.

Der längliche Hohlkörper 43 weist zwei teleskopartig angeordnete Rohre 44 und 45 auf, die sich in einem mittleren Abschnitt überlappen. Wie weit sich die beiden Rohre überlappen hängt von dem Abstand zwischen der Roboterbasis 38 und dem Trägerelement 42 ab. In dem länglichen Hohlkörper ist ein Pneumatikzylinder 52 mit einer Kolbenstange 53 angeordnet. Über diesen Pneumatikzylinder wird eine in axialer Richtung des länglichen Hohlköpers wirkende Kraft ausgeübt, mit der der längliche 43 Hohlkörper das Trägerelement 42 nach unten in eine der Roboterbasis 38 entgegen gesetzte Richtung drückt. Die Rotationsantriebe 39 der "Seile 37 üben wiederum eine in die entgegen gesetzte Richtung wirkende Kraft auf das Trägerelement 42 aus. Somit zieht der Pneumatikzylinder 52 in der Tendenz die beiden Rohre 44 und 45 auseinander, während die Rotationsantriebe 39 der Seile 37 die Rohre 44 und 45 zusammenschieben. Der längliche Hohlkörper 43 ist an seinem oberen Ende Ober ein erstes Kardangelenk 46 mit einem drehbar in der Roboterbasis 38 angeordneten ersten Hohlwelle 47 verbunden. Dank des ersten Kardangelenks 46 ist der längliche Hohlkörper 43 in mehrere Richtungen beweglich mit der Roboterbasis 38 verbunden. Eine erste Hohlwelle 47 an der Roboterbasis 38 bildet die Verbindung zwischen dem ersten Kardangelenk 46 und einem an der Roboterbasis 38 angeordneten Rotationsantrieb 48. Das Drehmoment des Rotationsantriebs wird über die erste Hohlwelle 47, das erste Kardangelenk 46, den länglichen Hohlköper 43, ein zweites Kardangelenk 49 und eine zweite Hohlwelle 50 auf ein in der Zeichnung nicht dargestelltes Werkzeug oder einen ebenfalls nicht dargestellten Greifer an der zweiten Hohlwelle 50 des Trägerelements 42 übertragen. Das zweite Kardangelenk 49 befindet sich an dem unteren Ende des länglichen Hohlkörpers 43. Dank des zweiten Kardangelenks 49 ist der längliche Hohlkörper 43 in mehrere Richtungen beweglich mit dem Trägerelement 42 verbunden. Die beiden Kardangelenke 46 und 49 sorgen dafür, dass der längliche Hohlkörper 43 den durch die Betätigungseinheiten 36 ausgelösten Bewegungen des Trägerelements 42 folgen kann.

Der längliche Hohlkörper 43, die Kardangelenke 46, 49 und die Hohlwellen 47 und 50 stimmen im wesentlichen mit denjenigen des ersten Ausführungsbeispiels überein. Sie sind alle mit einem durchgängigen Hohlraum ausgestattet, wobei sich jeder Hohlraum eines Bauteils an den Hohlraum des benachbarten Bauteils anschließt. Auf diese Weise entsteht von der dem Trägerelement abgewandten Seite der Roboterbasis 38 bis zu der der Roboterbasis abgewandten Seite des Trägerelements 42 ein durchgehender Hohlraum, in welchem Versorgungsleitungen 51 nach außen abgeschirmt angeordnet sind. Die Versorgungsleitungen 51 sind in dem länglichen Hohlkörper abschnittsweise schraubenförmig gewickelt.

Um eine in axialer Richtung wirkende Kraft auf das Trägerelement 42 ausüben zu können, ist der längliche Hohlkörper mit einem Pneumatikzylinder 52 ausgestattet. Der Pneumatikzylinder ist in dem Hohlkörper 43 angeordnet und teilweise von der Wicklung der Versorgungsleitungen 51 umgeben. Es handelt sich daher um einen inneren Aktuator. Der Pneumatikzylinder ist mit der ersten Hohlwelle 47 beweglich verbunden. Die Kolbenstange 53 ist mit der zweiten Hohlwelle 50 beweglich verbunden.

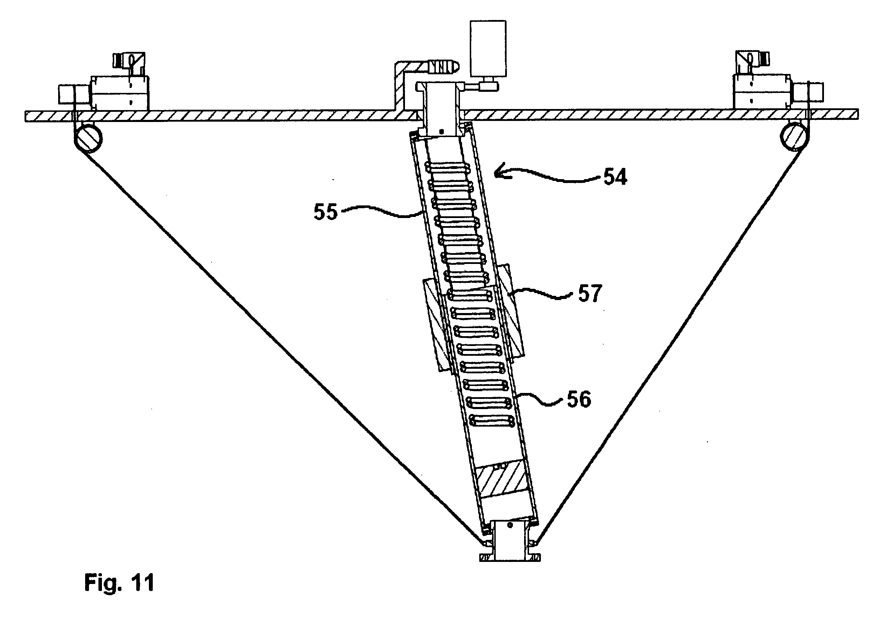

In Figur 11 ist ein drittes Ausführungsbeispiel eines Industrieroboters im Längsschnitt dargestellt. Dieses Ausführungsbeispiel stimmt bis auf den länglichen Hohlkörper 54 mit dem Industrieroboter gemäß Figur 10 überein. Im folgenden ist daher lediglich der längliche Hohlkörper beschrieben. Dieser ist als Pneumatikzylinder ausgebildet. Der Zylinder 55 und die Kolbenstange 56 sind als Hohlkörper, nämlich als Rohre ausgebildet. Innerhalb des Zylinders 55 und der Kolbenstange sind die Versorgungsleitungen 51 angeordnet. In einer den länglichen Hohlkörper an der Außenseite umgebende Kammer 57 wird der Druck zum Verschieben der Kolbenstange in dem Zylinder auf- und abgebaut. Es handelt sich daher im Unterschied zu dem Ausführungsbeispiel gemäß Figur 10 um einen äußeren Aktuator.

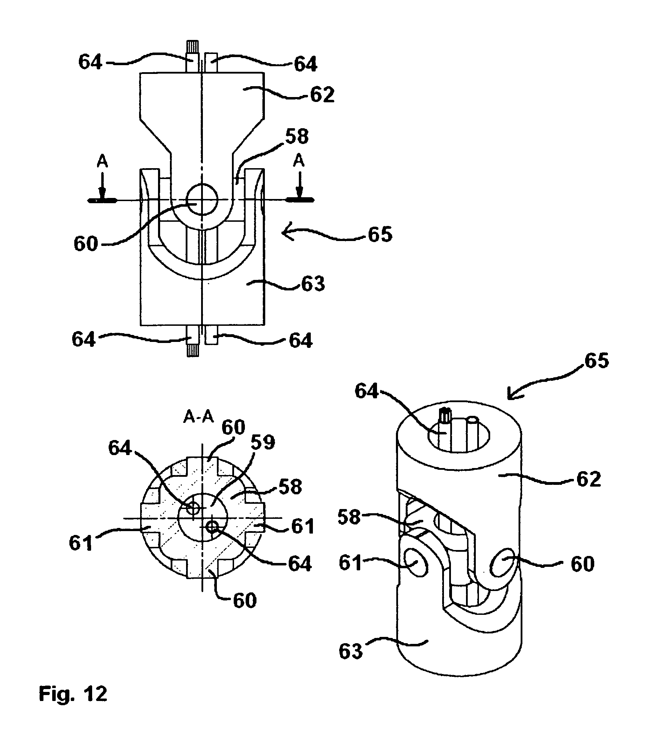

In Figur 12 ist ein weiteres Ausführungsbeispiel eines hohlen Kardangelenks für einen Industrieroboter gemäß Figuren 1, 9 und 11 in verschiedenen Ansichten dargestellt. Das Kardangelenk weist ein zentrales Gelenkteil 58, welches mit einem durchgängigen Hohlraum 59 ausgestattet ist. An dem zentralen Gelenkteil 58 sind zwei Achsstummelpaare 60, 61 angeordnet, deren Drehachsen sich unter einem Winkel von 90° kreuzen. Das erste Achsstummelpaar 60 ist in einem ersten Gelenkteil 62 drehbar gelagert. Das zweite Achsstummelpaar ist in einem zweiten Gelenkteil 63 drehbar gelagert. Das erste und das zweite Gelenkteil weisen einen durchgängigen Hohlraum mit entsprechendem Durchmesser wie das zentrale Gelenkteil auf. Die Hohlräume der drei Gelenkteile 58, 62, 63 schließen sich aneinander an. In dieser Abfolge von Hohlräumen sind Versorgungsleitungen 64 angeordnet. Sie durchdringen das Kardangelenk von einem Ende zu anderen. Dies ist in der Seitenansicht erkennbar.

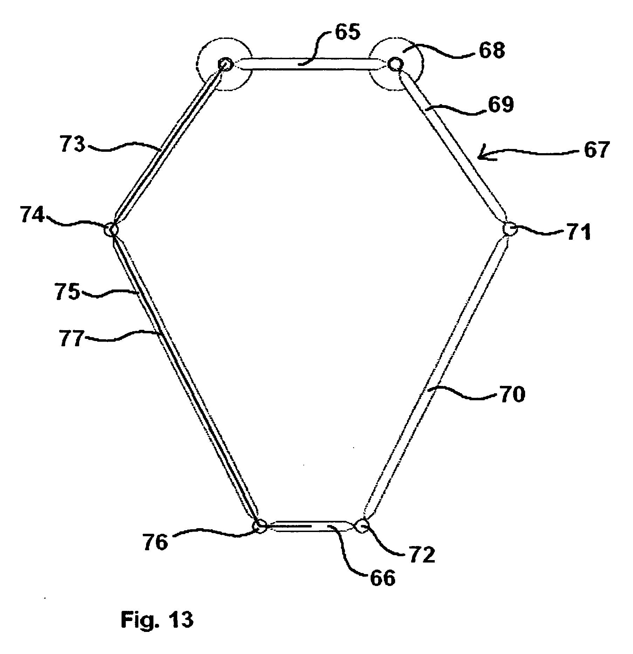

In Figur 13 ist ein viertes Ausführungsbeispiel eines Industrieroboters nach dem Delta-Prinzip mit einer Roboterbasis 65, einem Trägerelement 66, an welchem ein Greifer oder ein Werkzeug angeordnet werden kann, und zwei als Steuerarme ausgebildete Betätigungseinheiten 67 dargestellt. Der Greifer und das Werkzeug sind in der Zeichnung nicht gezeigt. Jeder der drei Betätigungseinheiten ist über eine Antriebseinheit 68 angetrieben. Die Betätigungseinheiten 67 weisen einen oberen Armabschnitt 69 und einen unteren Armabschnitt 70 auf. Bei den oberen Armabschnitten 69 handelt es sich um einen Hohlkörper mit durchgängigem ersten Hohlraum 73. Der untere Armabschnitt 70 weist zwei parallel verlaufende Stangen auf, von denen in der Zeichnung nur jeweils die dem Betrachter zugewandte Stange erkennbar ist. Eine der beiden Stangen weist einen durchgängigen dritten Hohlraum 75 auf. Die beiden Stangen des unteren Ärmabschnftts 70 einer Betätigungseinheit 67 sind über Gelenke 71 an ihrem oberen Ende mit dem oberen Armabschnitt 69 der Betätigungseinheit 67 und ober Gelenke 72 mit dem Trägerelement 66 verbunden. Die Gelenke 71 stimmen zumindest 4 qualitativ mit den Gelenken 72 überein. Ein derartiges Gelenk ist in Figur 12 dargestellt. Es handelt sich um ein Kardangelenk. Hierzu wird auf die obige Beschreibung zu Figur 12 verwiesen. Darüber hinaus können die hohlen Gelenke auch entsprechend Figur 5 aus mehreren Ringen ausgebaut sein, die über sich kreuzende Achse miteinander und mit den Armabschnitten oder dem Trägerelement verbunden sind.

Dass hohle Gelenk 71 weist einen durchgängigen zweiten Hohlraum 74 auf. Dass hohle Gelenk 72 weist einen durchgängigen vierten Hohlraum 75 auf. Die Hohlräume 73, 74, 75, und 76 der oberen und unteren Armabschnitte 69, 70 und der hohlen Gelerike 71, 72 schließen sich aneinander an und bilden einen durchgehenden Kanal von der Roboterbasis 65 bis zu dem Trägerelement 66. In diesem Kanal ist eine Versorgungsleitung 77' angeordnet. Sie reicht von der Roboterbasis 65 bis zu dem Trägerelement'66.

In dem dargestellten vierten Ausführungsbeispiel sind beide Betätigungseinheiten hohl ausgebildet. Es genügt jedoch, wenn eine der beiden Betätigungseinheften hohl ist.

### Bezugszahlen

- 1: Roboterbasis
- 2: Trägerelement
- 3:
- 4: Betätigungseinheit
- 5: Antriebswelle
- 6: Motor
- 7: oberer Armabschnitt
- 8: unterer Armabschnitt
- 9: Stange
- 10: Stange
- 11: Gelenk
- 12: Gelenk
- 13: Gelenkkopf
- 14: Ring
- 15: Aufnahmeelement
- 16: Aufnahmeelement
- 17: Aufnahme
- 18: Schraubenfeder
- 19: Brückenelement
- 20: länglicher Hohlkörper
- 21: Rohr
- 22: Rohr
- 23: Ring
- 24: Ring
- 25: Ventilsteuerung
- 26: Versorgungsleitungen
- 27: Achse des Kardangelenks
- 28: Achse des Kardangelenks
- 29: Nut
- 30: Wulst
- 31: Rotationsantrieb
- 32: erste Hohlwelle
- 33: zweite Hohlwelle
- 34: erstes Kardangelenk
- 35: zweites Kardangelenk
- 36: Betätigungseinheit
- 37: Seil
- 38: Roboterbasis
- 39: Rotationsantrieb
- 40: Welle
- 41: Rolle
- 42: Trägerelement
- 43: länglicher Hohlkörper
- 44: Rohr
- 45: Rohr
- 46: erstes Kardangelenk
- 47: erste Hohlwelle
- 48: Rotationsantrieb
- 49: zweites Kardangelenk
- 50: zweite Hohlwelle
- 51: Versorgungsleitung
- 52: Pneumatikzylinder
- 53: Kolbenstange
- 54: länglicher Hohlkörper
- 55: Zylinder
- 56: Kolbenstange
- 57: Kammer
- 58: zentrales Gelenkteil
- 59: Hohlraum
- 60: erstes Achsstummelpaar
- 61: zweites Achsstummelpaar
- 62: erstes Gelenkteil
- 63: zweites Gelenkteil
- 64: Versorgungsleitung
- 65: Roboterbasis
- 66: Trägerelement
- 67: Betätigungseinheit
- 68: Antriebseinheit
- 69: oberer Armabschnitt der Betätigungseinheit
- 70: unterer Armabschnitt der Betätigungseinheit
- 71: Gelenk zwischen einem oberen und einem unteren Armabschnitt
- 72: Gelenk zwischen einem unteren Armabschnitt und dem Trägerelement
- 73: erster Hohlraum
- 74: zweiter Hohlraum
- 75: dritter Hohlraum
- 76: vierter Hohlraum
- 77: Versorgungsleitung

## Patentansprüche

1. Industrieroboter mit Parallelkinematik
mit einer Roboterbasis (1, 38),
mit einem Trägerelement (2, 42) zur Aufnahme eines Greifers oder eines Werkzeugs,
mit mehreren beweglichen, länglichen Betätigungseinheiten (4, 36), die mit ihrem einen Ende mit an der Roboterbasis (1, 38) angeordneten Antriebseinheiten (6, 39) verbunden sind, und deren anderes Ende mit dem Trägerelement (2, 42) beweglich verbunden ist,
mit einem einen durchgängigen Hohlraum aufweisenden länglichen Hohlkörper (20, 43, 54), welcher unmittelbar oder mittelbar beweglich mit der Roboterbasis (1, 38) verbunden ist,
mit einem einen durchgängigen Hohlraum aufweisenden Gelenk (35, 49, 65) mit mehreren Freiheitsgraden, über welches der längliche Hohlkörper (20, 43, 54) mit dem Trägerelement (2, 42) beweglich verbunden ist, wobei sich der Hohlraum des Gelenks (35, 49, 65) an den Hohlraum des länglichen Hohlkörpers (20, 43, 54) anschließt und die Hohlräume einen Kanal von der Roboterbasis (1., 38) bis zum Trägerelement (2. 42) bilden, mit mindestens einer pneumatischen und/ oder hydraulischen und/ oder elektrischen und/ oder optischen Versorgungsleitung (26, 51, 64) für einen an dem Trägerelement (2, 42) angeordneten Greifer oder ein an dem Trägerelement (2, 42) angeordnetes Werkzeug, welche durch den Hohlraum des länglichen Hohlkörpers (20, 43, 54) und den Hohlraum des hohlen Gelenks (35, 49, 65) von der Roboterbäsis bis zu dem Trägerelement (2, 42) geführt ist.

2. Industrieroboter nach Anspruch 1, **dadurch gekennzeichnet, dass** das hohle Gelenk (35, 49, 65) mindestens zwei relativ zueinander bewegliche Gelenkteile (23, 24, 58, 62, 63) aufweist, von denen ein erstes Gelenkteil (23, 62) mit dem länglichen Hohlkörper (20, 43, 54) verbunden ist, und von denen ein zweites Gelenkteil (24, 63) mit dem Trägerelement (2, 42) oder einem an dem Trägerelement (2, 42) angeordneten Werkzeug oder Greifer verbunden ist, dass das erste und das zweite Gelenktell (23, 24. 62, 63) beweglich miteinander verbunden sind, und dass das erste Gelenkteil (23, 62) und das zweite Gelenkteil (24, 63) mit einem Hohlraum ausgestattet sind und/ oder um einen Hohlraum herum angeordnet sind.

3. Industrieroboter nach Anspruch 2, **dadurch gekennzeichnet, dass** das erste und das zweite Gelenkteil (62, 63) über mindestens ein drittes Gelenkteil (58) beweglich miteinander verbunden sind, und das oder die dritten Gelenkteile (58) mit einem Hohlraum (59) ausgestattet sind und/ oder um einen Hohlraum herum angeordnet sind.

4. Industrieroboter nach Anspruch 1, 2 oder 3, **dadurch gekennzeichnet, dass** das hohle Gelenk (65) ein Kardangelenks ist, das ein mit gekreuzten Achsen oder Achsstummelpaaren (60, 61) ausgestattetes zentrales rohr- oder ringförmiges Gelenkteil (58) aufweist, dass eine erste Achse oder ein erstes Achsstummelpaar (60) in oder an einem ersten mit dem länglichen Hohlkörper (20, 43) verbundenen Gelenkteil (62) gelagert ist, und dass eine zweite Achse oder ein zweites Achsstümmelpaar (61) in oder an einem zweiten mit dem Trägerelement (2, 42) verbundenen Gelenkteil (63) gelagert ist.

5. Industrieroboter nach Anspruch 1, 2 oder 3, **dadurch gekennzeichnet, dass** das hohle Gelenk (34, 35, 46, 49) ein Kardangelenk ist, welches als Gelenkteile zwei Ringe (23, 24) oder Rohre aufweist, die über gekreuzte Achsen (27, 28) drehbar miteinander verbunden sind, und dass einer der beiden Ringe (23) oder Rohre mit dem länglichen Hohlkörper (20.43) und der andere Ring (24) oder das andere Rohr mit dem Trägerelement (2, 42) verbunden ist ' '

6. Industrieroboter nach Anspruch 1, 2 oder 3, **dadurch gekennzeichnet, dass** das hohle Gelenk ein Gleichlaufgelenk Ist, bei dem das innere Gelenkteil einen Hohlraum aufweist, der das Gelenkteil vollständig durchdringt.

7. Industrieroboter nach einem der vorhergehenden Ansprüche, **dadurch gekennzeichnet, dass** an der Roboterbasis (1, 38) oder in dem länglichen Hohlkörper (20, 43, 54) ein Antrieb (31, 48) oder ein Aktuator (52, 53) angeordnet ist, welcher ein Drehmoment oder eine Kraft erzeugt, und das der längliche Hohlkörper (20,43, 54) als Übertragungseinrichtung ausgebildet ist, welche die Kraft und/ oder das Drehmoment des Antriebs (31, 48) oder Aktuators (52, 53) auf das Trägerelement (2, 42) oder auf einen an dom Trägerelement (2, 42) angeordneten Greifer oder auf ein an dem Trägerelement (2, 42) angeordnetes Werkzeug übenrägt.

8. Industrieroboter nach einem der Ansprüche 1 bis 6, **dadurch gekennzeichnet, dass** der längliche Hohlkörper (54) als Aktuator oder als Teil eines Aktuators ausgebildet ist, welcher eine in axialer Richtung des länglichen Hohlkörpers wirkende Kraft erzeugt, und auf einen an dem Trägerelement (42) angeordneten Greifer oder auf ein an dem Trägeretement (42) angeordnetes Werkzeug überträgt.

9. Industrieroboter nach Anspruch 7. **dadurch gekennzeichnet, dass** das Trägerelement (2, 42) mit einer drehbar in dem Trägerelement (2, 42) gelagerten Hohlwelle (33, 50) ausgestattet ist, und dass das hohle Gelenk (35, 49) zur Übertragung von Drehmomenten mit dem dem länglichen Hohlkörper (20, 43) zugewandten Ende der Hohlwellen (33, 50) verbunden ist.

10. Industrieroboter nach einem der vorhergehenden Ansprüche, **dadurch gekennzeichnet, dass** er mit einem innen hohl ausgebildeten zweiten Gelenk (34, 46) mit mehreren Freiheitsgraden ausgestattet ist, über welches der längliche Hohlkörper (20, 43, 54) mit der Roboterbasis (1, 38) oder einen an der Roboterbasis (1, 38) angeordneten Antrieb (31, 48) verbunden ist, und dass die Versorgungsleitungen (26, 51) durch das zweite Gelenk (34, 46) hindurchgeführt sind.

11. Industrieroboter nach Anspruch 9, **dadurch gekennzeichnet, dass** der längliche Hohlkörper (20, 43) zusammen mit dem oder den Gelenken (34, 35, 46, 49) an seinen Enden als Gelenkwelle mit Längenausgleich ausgebildet ist.

12. Industrieroboter nach einem der vorhergehenden Ansprüche, **dadurch gekennzeichnet, dass** der längliche Hohlkörper (20, 43, 54) mindestens zwei teleskopartig ineinander verschiebbare Rohre (21, 22. 44, 45, 55, 56) aufweist.

13. Industrieroboter nach einem der vorhergehenden Ansprüche, **dadurch gekennzeichnet, dass** in dem länglichen Hohlkörper (20, 43, 54) mindestens ein pneumatisches oder hydraulisches Steuerelement (25) angeordnet ist zur Betätigung eines an dem Trägerelement (2, 42) angeordneten Greifers oder Werkzeugs.

14. Industrieroboter nach einem der vorhergehenden Ansprüche, **dadurch gekennzeichnet, dass** die Versorgungsleitung (26, 51) in dem länglichen Hohlkörper (20, 43, 54) zumindest abschnittsweise schrauben- oder spiralförmig aufgewickelt ist.

15. Industrieroboter nach einem der vorhergehenden Ansprüche, **dadurch gekennzeichnet, dass** er als DeJtaroboter ausgebildet ist, der als Betätigungseinheiten Steuerarme (4) mit jeweils einem oberen und einem unteren Armabschnitt (7, 8) und mit Gelenken (11, 12) zwischen dem unteren Armabschnitt (8) und dem oberen Armabschnitt (7) jedes Steuerarms (4) einerseits und zwischen jedem unteren Armabschnitt (8) und dem Trägerelement (2) andererseits aufweist.

16. Industrieroboter nach einem der vorhergehenden Ansprüche, **dadurch gekennzeichnet, dass** er als Seilroboter mit Seilen (37) als Betätigungseinheiten (36) ausgebildet ist, dass die Antriebe (39) als Rotations- oder Linearantriebe ausgebildet sind, welche die freie Länge der Seile (37) durch Auf und Abwickeln auf eine mit einem Seilende verbundene Welle (40) oder durch Vor- und Zurückschieben einer mit einem Seilende verbundenen Schubstange vorgeben, und dass die Seile (37) durch eine von einem Aktuator (52, 53, 54) erzeugte und durch den länglichen Hohlkörper (43, 54) auf das Trägerelements (42) übertragene Kraft, welche in eine der Roboterbasis (38) abgewandte Richtung gerichtet ist, gespannt sind.

17. Industrieroboter mit Parallelkinematik
mit einer Roboterbasis (65),
mit einem Trägerelement (66) zur Aufnahme eines Greifers oder eines Werkzeugs,
mit mehreren beweglichen, länglichen, als Steuerarme ausgebildeten Betätigungseinheiten (67), die mit ihrem einen Ende mit an der Roboter-basis (65) angeordneten Antriebseinheiten (68) verbunden sind, und deren anderes Ende mit dem Trägerelements (66) beweglich verbunden ist, mit jeweils einem oberen und einem unteren Armabschnitt (69, 70) der Betätigungseinheiten (67),
mit Gelenken (71, 72) zwischen dem unteren Armabschnitt (70) und dem oberen Armabschnitt (69) jeder Betätigungseinheit (67) und zwischen jedem unteren Armabschnitt (70) und dem Trägerelement (66),
mit mehreren Freiheitsgraden der Gelenke (7'1, 72),
wobei mindestens eine der Betätigungseinheiten (67) hohl ausgebildet ist und einen oberen Armabschnitt (69) mit einem durchgängigen ersten Hohlraum (73), ein hohles Gelenk z() mit einem durchgängigen, sich an den ersten Hohlraum (73) anschließenden zweiten Hohlraum (74) zwischen dem oberen und dem unteren Armabschnitt (69, 70), einen unteren Armabschnitt (70) mit einem durchgängigen sich an den zweiten Hohlraum (74) anschlleßenden dritten Hohlraum (75) und ein hohles Gelenk (72) mit einem durchgängigen, sich-an den dritten Hohlraum (75) anschließenden vierten Hohlraum (76) zwischen dem unteren Armabschnitt (70) und dem Trägerelement (66) aufweist, wobei die Hohlräume (73-76) einen durchgehenden Kanal von der Roboterbasis (65) bis zu dem Trägerelement (66) bilden,
und mit mindestens einer pneumatischen und/ oder hydraulischen und/ oder elektrischen und/ oder optischen Versorgungsleitung (77) für einen an dem Trägerelement (66) angeordneten Greifer oder ein an dem Trägerelement (66) angeordnetes Werkzeug, welche durch den ersten, zweiten, dritten und vierten Hohlraum (73, 74, 75, 76) der hohl ausgebildeten Betätigungseinheit (67) von der Roboterbasis (65) bis zu dem Trägerelement (66) geführt Ist.

18. Industrieroboter nach Anspruch 17, **dadurch gekennzeichnet, dass** der obere Armabschnitt (69) der hohl ausgebildeten Betätigungseinheit (67) als Hohlkörper ausgebildet ist, und dass der untere Armabschnitt (70) mindestens einen Hohlkörper aufweist

19. Industrieroboter nach Anspruch 17 oder 18, **dadurch gekennzeichnet, dass** das hohle Gelenk (71, 72) ein Kardangelenk (65) ist, das ein mit gekreuzten Achsen oder Achssturrirnelpaaren (60, 61) ausgestattetes zentrales rohr- oder ringförmiges Gelenkteil (58) aufweist, dass eine erste Achse oder ein erstes Achsstummelpaar (60) in oder an einem ersten mit einem Armabschnitt (69, 70) verbundenen Gelenkteil (62) gelagert ist, und dass eine zweite Achse oder ein zweites Achsstummelpaar (61) in oder an einem zweiten mit dem anderen Armabschnitt oder mit dem Trägerelement (66) verbundenen Gelenkteil (63) gelagert ist.

20. Industrieroboter nach Anspruch 17 oder 18, **dadurch gekennzeichnet, dass** das hohle Gelenk (71, '72) ein Kardangelenk ist, welches als Gelenk-teile zwei Ringe oder Rohre aufweist, die über gekreuzte Achsen drehbar mitelnander verbunden sind, und dass einer der beiden Ringe oder Rohre mit einem Armabschnitt (69,70) und der andere Ring oder das andere Rohr mit dem anderen Armabschnitt (69, 70) oder mit dem Trägerelement (66) verbunden ist.

21. Industrieroboter nach Anspruch 17 oder 18, **dadurch gekennzeichnet, dass** das Gelenk (71, 72) ein Gleichlaufgelenk ist, bei dem das innere Gelenkteil einen Hohlraum aufweist, der das Gelenkteil vollständig durchdringt.

## Claims

1. An industrial robot with parallel kinematics
with a robot base (1, 38),
with a carrier element (2, 42) for receiving a gripper or a tool,
with several moveable, elongated actuating units (4, 36), which at their one end are connected to drive units (6, 39) arranged on the robot base (1, 38) and the other end of which is moveably connected to the carrier element (2, 42),
with an elongated hollow body (20, 43, 54), having a continuous cavity, which elongated hollow body (20, 43, 54) is moveably connected directly or indirectly to the robot base (1, 38),
with a joint (35, 49, 65), having a continuous cavity and several degrees of freedom, via which the elongated hollow body (20, 43, 54) is moveably connected to the carrier element (2, 42),
wherein the cavity of the joint (35, 49, 65) adjoins the cavity of the elongated hollow body (20, 43, 54) and the cavities form a channel from the robot base (1, 38) to the carrier element (2, 42),
with at least one pneumatic and/or hydraulic and/or electric and/or optical supply line (26, 51, 64) for a gripper arranged on the carrier element (2, 42) or a tool arranged on the carrier element (2, 42), which supply line is guided through the cavity of the elongated hollow body (20, 43, 54) and the cavity of the hollow joint (35, 49, 65) from the robot base to the carrier element (2, 42).

2. The industrial robot according to claim 1, **characterized in that** the hollow joint (35, 49, 65) has at least two joint parts (23, 24, 58, 62, 63) moveable relative to one another, of which a first joint part (23, 62) is connected to the elongated hollow body (20, 43, 54), and of which a second joint part (24, 63) is connected to the carrier element (2, 42) or a tool or a gripper arranged on the carrier element (2, 42), that the first and the second joint part (23, 24, 62, 63) are moveably connected to one another, and that the first joint part (23, 62) and the second joint part (24, 63) are equipped with a cavity and/or are arranged around a cavity.

3. The industrial robot according to claim 2, **characterized in that** the first and the second joint part (62, 63) are moveably connected to one another via at least one third joint part (58), and that the third joint part or joint parts (58) are equipped with a cavity (59) and/or are arranged around a cavity.

4. The industrial robot according to claim 1, 2 or 3, **characterized in that** the hollow joint (65) is a cardan joint, which has a central tubular or annular joint part (58) equipped with crossed axles or pairs of axle stubs (60, 61), that a first axle or a first pair of axle stubs (60) is supported in or on a first joint part (62) connected to the elongated hollow body (20, 43), and that a second axle or a second pair of axle stubs (61) is supported in or on a second joint part (63) connected to the carrier element (2, 42).

5. The industrial robot according to claim 1, 2 or 3, **characterized in that** the hollow joint (34, 35, 46, 49) is a cardan joint, which as joint parts has two rings (23, 24) or tubes, which are rotatably connected to one another via crossed axles (27, 28), and that one of the two rings (23) or tubes is connected to the elongated hollow body (20, 43) and the other ring (24) or the other tube is connected to the carrier element (2, 42).

6. The industrial robot according to claim 1, 2 or 3, **characterized in that** the hollow joint is a constant velocity joint, in which the inner joint part has a cavity, which penetrates the joint part completely.

7. The industrial robot according to one of the preceding claims, **characterized in that** a drive (31, 48) or an actuator (52, 53) is arranged on the robot base (1, 38) or in the elongated hollow body (20, 43, 54), which generates a torque or a force, and that the elongated hollow body (20, 43, 54) is embodied as a transmission device, which transmits the force and/or the torque of the drive (31, 48) or actuator (52, 53) to the carrier element (2, 42) or to a gripper arranged on the carrier element (2, 42) or to a tool arranged on the carrier element (2, 42).

8. The industrial robot according to one of claims 1 to 6, **characterized in that** the elongated hollow body (54) is embodied as an actuator or as part of an actuator, which generates a force acting in the axial direction of the elongated hollow body, and transmits it to a gripper arranged on the carrier element (42) or to a tool arranged on the carrier element (42).

9. The industrial robot according to claim 7, **characterized in that** the carrier element (2, 42) is equipped with a hollow shaft (33, 50) rotatably supported in the carrier element (2, 42), and that the hollow joint (35, 49) is connected to the end of the hollow shaft (33, 50) facing towards the elongated hollow body (20, 43) to transmit torques.

10. The industrial robot according to one of the preceding claims, **characterized in that** it is equipped with a second joint (34, 46) embodied in an internally hollow manner with several degrees of freedom, via which the elongated hollow body (20, 43, 54) is connected to the robot base (1, 38) or a drive (31, 48) arranged on the robot base (1, 38), and that the supply lines (26, 51) are guided through the second joint (34, 46).

11. The industrial robot according to claim 9, **characterized in that** the elongated hollow body (20, 43) together with the joint or joints (34, 35, 46, 49) on its ends is embodied as a jointed shaft with length compensation.

12. The industrial robot according to one of the preceding claims, **characterized in that** the elongated hollow body (20, 43, 54) has at least two tubes (21, 22, 44, 45, 55, 56) that are displaceable inside one another in a telescoping manner.

13. The industrial robot according to one of the preceding claims, **characterized in that** at least one pneumatic or hydraulic control element (25) is arranged in the elongated hollow body (20, 43, 54) to actuate a gripper or a tool arranged on the carrier element (2, 42).

14. The industrial robot according to one of the preceding claims, **characterized in that** the supply line (26, 51) is at least in sections wound in a screw-shaped or spiral-shaped manner in the elongated hollow body (20, 43, 54).

15. The industrial robot according to one of the preceding claims, **characterized in that** it is embodied as a Delta robot, which as actuating units has control arms (4) with respectively one upper and one lower arm section (7, 8) and with joints (11, 12) between the lower arm section (8) and the upper arm section (7) of each control arm (4) on the one hand and between each lower arm section (8) and the carrier element (2) on the other hand.

16. The industrial robot according to one of the preceding claims, **characterized in that** it is embodied as a cable robot with cables (37) as actuating units (36), that the drives (39) are embodied as rotation or linear drives, which give the free length of the cables (37) by winding and unwinding on a shaft (40) connected to a cable end or by advancing and retracting a push rod connected to a cable end, and that the cables (37) are tensioned by means of a force generated by an actuator (52, 53, 54) and transmitted by the elongated hollow body (43, 54) to the carrier element (42), which force is directed in a direction facing away from the robot base (38).

17. An industrial robot with parallel kinematics,
with a robot base (65),
with a carrier element (66) for receiving a gripper or a tool,
with several moveable, elongated actuating units (67) embodied as control arms, which are connected at their one end to drive units (68) arranged on the robot base (65), and the other end of which is moveably connected to the carrier element (66),
with respectively one upper and one lower arm section (69, 70) of the actuating units (67),
with joints (71, 72) between the lower arm section (70) and the upper arm section (69) of each actuating unit (67) and between each lower arm section (70) and the carrier element (66),
with several degrees of freedom of the joints (71, 72),
wherein at least one of the actuating units (67) is embodied in a hollow manner and has an upper arm section (69) with a continuous first cavity (73), a hollow joint (71) with a continuous second cavity (74) adjoining the first cavity (73), between the upper and the lower arm section (69, 70), a lower arm section (70) with a continuous third cavity (75) adjoining the second cavity (74), and a hollow joint (72) with a continuous fourth cavity (76) adjoining the third cavity (75) between the lower arm section (70) and the carrier element (66), whereby the cavities (73 - 76) form a continuous channel from the robot base (65) to the carrier element (66),
with at least one pneumatic and/or hydraulic and/or electric and/or optical supply line (77) for a gripper arranged on the carrier element (66) or a tool arranged on the carrier element (66), which supply line is guided through the first, second, third and fourth cavity (73, 74, 75, 76) of the hollow actuating unit (67) from the robot base (65) to the carrier element (66).

18. The industrial robot according to claim 17, **characterized in that** the upper arm section (69) of the hollow actuating unit (67) is embodied as a hollow body and that the lower arm section (70) has at least one hollow body.

19. The industrial robot according to claim 17 or 18, **characterized in that** the hollow joint (71, 72) is a cardan joint (65), which has a central tubular or annular joint part (58) equipped with crossed axles or pairs of axle stubs (60, 61), that a first axle or a first pair of axle stubs (60) is supported in or on a first joint part (62) connected to an arm section (69, 70), and that a second axle or a second pair of axle stubs (61) is supported in or on a second joint part (63) connected to the other arm section or to the carrier element (66).

20. The industrial robot according to claim 17 or 18, **characterized in that** the hollow joint (71, 72) is a cardan joint, which as joint parts has two rings or tubes, which are rotatably connected to one another via crossed axles, and that one of the two rings or tubes is connected to one arm section (69, 70) and the other ring or the other tube is connected to the other arm section (69, 70) or to the carrier element (66).

21. The industrial robot according to claim 17 or 18, **characterized in that** the joint (71, 72) is a constant velocity joint, in which the inner joint part has a cavity that completely penetrates the joint part.

## Revendications

1. Robot industriel à cinématique parallèle
comprenant une base (1, 38),
un élément porteur (2, 42) pour recevoir une pince ou un outil,
plusieurs unités d'actionnement allongées mobiles (4, 36) qui sont reliées par une de leurs extrémités à des unités d'entraînement (6, 39) disposées sur la base (1, 38) et par l'autre extrémité de façon mobile à l'élément porteur (2, 42),
un corps creux allongé (20, 43, 54) qui présente une cavité traversante et qui est relié de façon directement ou indirectement mobile à la base (1, 38),
une articulation (35, 49, 65) présentant une cavité traversante et plusieurs degrés de liberté, par laquelle le corps creux allongé (20, 43, 54) est relié de façon mobile à l'élément porteur (2, 42), ladite cavité de l'articulation (35, 49, 65) étant contiguë à la cavité du corps creux allongé (20, 43, 54), ces cavités formant un canal de la base (1, 38) jusqu'à l'élément porteur (2, 42),
au moins une conduite/un câble d'alimentation pneumatique et/ou hydraulique et/ou électrique et/ou optique (26, 51, 64) pour une pince disposée sur l'élément porteur (2, 42) ou un outil disposé sur l'élément porteur (2, 42), ladite conduite/ledit câble allant de la base à l'élément porteur (2, 42) en passant par la cavité du corps creux allongé (20, 43, 54) et la cavité de l'articulation creuse (35, 49, 65).

2. Robot industriel selon la revendication 1, **caractérisé en ce que** l'articulation creuse (35, 49, 65) présente au moins deux parties d'articulation mobiles l'une part rapport à l'autre (23, 24, 58, 62, 63), une première partie d'articulation (23, 62) étant reliée au corps creux allongé (20, 43, 54) et une deuxième partie d'articulation (24, 63) étant reliée à l'élément porteur (2, 42) ou à un outil ou une pince disposé(e) sur l'élément porteur (2, 42), **en ce que** la première et la deuxième partie d'articulation (23, 24, 62, 63) sont reliées de façon mobile l'une à l'autre, et **en ce que** la première partie d'articulation (23, 62) et la deuxième partie d'articulation (24, 63) sont dotées d'une cavité et/ou disposées autour d'une cavité.

3. Robot industriel selon la revendication 2, **caractérisé en ce que** la première et la deuxième partie d'articulation (62, 63) sont reliées l'une à l'autre de façon mobile par au moins une troisième partie d'articulation (58), et que la ou les troisièmes parties d'articulation (58) sont dotées d'une cavité (59) et/ou disposées autour d'une cavité.

4. Robot industriel selon la revendication 1, 2 ou 3, **caractérisé en ce que** l'articulation creuse (65) est un joint de cardan, qui présente une partie d'articulation centrale tubulaire ou annulaire (58) dotée d'axes ou de paires de tourillons disposé(e)s en croix (60, 61), **en ce qu'**un premier axe ou une première paire de tourillons (60) est logé(e) dans ou sur une première partie d'articulation (62) reliée au corps creux allongé (20, 43), et **en ce qu'**un deuxième axe ou une deuxième paire de tourillons (61) est logé(e) dans ou sur une deuxième partie d'articulation (63) reliée à l'élément porteur (2, 42).

5. Robot industriel selon la revendication 1, 2 ou 3, **caractérisé en ce que** l'articulation creuse (34, 35, 46, 49) est un joint de cardan qui présente, en tant que parties d'articulation, deux anneaux (23, 24) ou tubes qui sont reliés l'un à l'autre de façon à pouvoir pivoter par des axes disposés en croix (27, 28), et **en ce qu'**un des deux anneaux (23) ou tubes est relié au corps creux allongé (20, 43) et que l'autre anneau (24) ou l'autre tube est relié à l'élément porteur (2, 42).

6. Robot industriel selon la revendication 1, 2 ou 3, **caractérisé en ce que** l'articulation creuse est un joint homocinétique dont la partie d'articulation intérieure présente une cavité qui traverse complètement la partie d'articulation.

7. Robot industriel selon l'une quelconque des revendications précédentes, **caractérisé en ce qu'**un entraînement (31, 48) ou un actuateur (52, 53) est disposé sur la base (1, 38) ou dans le corps creux allongé (20, 43, 54), ledit entraînement ou actuateur générant un couple ou une force, et **en ce que** le corps creux allongé (20,43, 54) est un dispositif de transmission qui transmet la force et/ou le couple de l'entraînement (31, 48) ou de l'actuateur (52, 53) à l'élément porteur (2, 42) ou à une pince disposée sur l'élément porteur (2, 42) ou à un outil disposé sur l'élément porteur (2, 42).

8. Robot industriel selon l'une quelconque des revendications 1 à 6, **caractérisé en ce que** le corps creux allongé (54) est un actuateur ou une partie d'un actuateur, lequel génère une force agissant dans le sens axial du corps creux allongé et la transmet à une pince disposée sur l'élément porteur (42) ou à un outil disposé sur l'élément porteur (42).

9. Robot industriel selon la revendication 7, **caractérisé en ce que** l'élément porteur (2, 42) est doté d'un arbre creux (33, 50) logé dans l'élément porteur (2, 42) de façon à pouvoir pivoter, et **en ce que** l'articulation creuse (35, 49) est reliée, pour la transmission de couples, à l'extrémité de l'arbre creux (33, 50) du côté du corps creux allongé (20, 43).

10. Robot industriel selon l'une quelconque des revendications précédentes, **caractérisé en ce que** ledit robot est doté d'une deuxième articulation (34, 46) présentant un intérieur creux et plusieurs niveaux de liberté, par laquelle le corps creux allongé (20, 43, 54) est relié à la base (1, 38) ou à un entraînement (31, 48) disposé sur la base (1, 38), et **en ce que** les conduites/câbles d'alimentation (26, 51) passent à travers la deuxième articulation (34, 46).

11. Robot industriel selon la revendication 9, **caractérisé en ce que** le corps creux allongé (20, 43) avec la ou les articulations (34, 35, 46, 49) à ses extrémités est un arbre de transmission avec compensation de longueur.

12. Robot industriel selon l'une quelconque des revendications précédentes, **caractérisé en ce que** le corps creux allongé (20, 43, 54) présente au moins deux tubes (21, 22, 44, 45, 55, 56) coulissant l'un dans l'autre à la façon d'un télescope.

13. Robot industriel selon l'une quelconque des revendications précédentes, **caractérisé en ce qu'**au moins un élément de commande pneumatique ou hydraulique (25) est disposé dans le corps creux allongé (20, 43, 54) pour l'actionnement d'une pince ou d'un outil disposé(e) sur l'élément porteur (2, 42).

14. Robot industriel selon l'une quelconque des revendications précédentes, **caractérisé en ce que** la conduite/le câble d'alimentation (26, 51) est enroulé(e), du moins en partie, en spirale ou en spire dans le corps creux allongé (20, 43, 54).

15. Robot industriel selon l'une quelconque des revendications précédentes, **caractérisé en ce que** ledit robot est un robot delta qui présente, en tant qu'unités d'actionnement, des bras de manipulation (4) comprenant respectivement un segment de bras supérieur et un segment de bras inférieur (7, 8) ainsi que des articulations (11, 12) entre le segment de bras inférieur (8) et le segment de bras supérieur (7) de chaque bras de manipulation (4) d'une part, et entre chaque segment de bras inférieur (8) et l'élément porteur (2) d'autre part.

16. Robot industriel selon l'une quelconque des revendications précédentes, **caractérisé en ce que** ledit robot est un robot à câbles doté de câbles (37) en tant qu'unités d'actionnement (36), **en ce que** les entraînements (39) sont des entraînements rotatifs ou linéaires qui commandent la longueur libre des câbles (37) en les enroulant ou les déroulant sur un arbre (40) relié à une extrémité des câbles ou en déplaçant vers l'avant ou l'arrière une bielle reliée à une extrémité des câbles, et **en ce que** les câbles (37) sont tendus par une force générée par un actuateur (52, 53, 54) et transmise par le corps creux allongé (43, 54) à l'élément porteur (42), ladite force étant dirigée dans le sens opposé à la base (38).

17. Robot industriel à cinématique parallèle
comprenant une base (65),
un élément porteur (66) pour recevoir une pince ou un outil,
plusieurs unités d'actionnement allongées mobiles (67) sous forme de bras de manipulation, qui sont reliées par une de leurs extrémités à des unités d'entraînement (68) disposées sur la base (65) et par l'autre extrémité de façon mobile à l'élément porteur (66),
respectivement un segment de bras supérieur et un segment de bras inférieur (69, 70) des unités d'actionnement (67),
des articulations (71, 72) entre le segment de bras inférieur (70) et le segment de bras supérieur (69) de chaque unité d'actionnement (67) et entre chaque segment de bras inférieur (70) et l'élément porteur (66), avec plusieurs niveaux de liberté des articulations (71, 72),
au moins une des unités d'actionnement (67) étant creuse et présentant un segment de bras supérieur (69) doté d'une première cavité traversante (73), une articulation creuse (71) dotée d'une deuxième cavité traversante (74) contiguë à la première cavité (73) entre le segment de bras supérieur et le segment de bras inférieur (69, 70), un segment de bras inférieur (70) doté d'une troisième cavité traversante (75) contiguë à la deuxième cavité (74), et une articulation creuse (72) dotée d'une quatrième cavité traversante (76) contiguë à la troisième cavité (75) entre le segment de bras inférieur (70) et l'élément porteur (66), lesdites cavités (73-76) formant un canal continu de la base (65) jusqu'à l'élément porteur (66), et au moins une conduite/un câble d'alimentation pneumatique et/ou hydraulique et/ou électrique et/ou optique (77) pour une pince disposée sur l'élément porteur (66) ou un outil disposé sur l'élément porteur (66), ladite conduite/ledit câble allant de la base (65) à l'élément porteur (66) en passant par la première, la deuxième, la troisième et la quatrième cavité (73, 74, 75, 76) de l'unité d'actionnement creuse (67).

18. Robot industriel selon la revendication 17, **caractérisé en ce que** le segment de bras supérieur (69) de l'unité d'actionnement creuse (67) est un corps creux, et **en ce que** le segment de bras inférieur (70) présente au moins un corps creux.

19. Robot industriel selon la revendication 17 ou 18, **caractérisé en ce que** l'articulation creuse (71, 72) est un joint de cardan (65) qui présente une partie d'articulation centrale tubulaire ou annulaire (58) dotée d'axes ou de paires de tourillons disposé(e)s en croix (60, 61), **en ce qu'**un premier axe ou une première paire de tourillons (60) est logé(e) dans ou sur une première partie d'articulation (62) reliée à un segment de bras (69, 70), et **en ce qu'**un deuxième axe ou une deuxième paire de tourillons (61) est logé(e) dans ou sur une deuxième partie d'articulation (63) reliée à l'autre segment de bras ou à l'élément porteur (66).

20. Robot industriel selon la revendication 17 ou 18, **caractérisé en ce que** l'articulation creuse (71, 72) est un joint de cardan qui présente, en tant que parties d'articulation, deux anneaux ou tubes qui sont reliés l'un à l'autre de façon à pouvoir pivoter par des axes disposés en croix, et **en ce qu'**un des deux anneaux ou tubes est relié à un segment de bras (69,70) et que l'autre anneau ou l'autre tube est relié à l'autre segment de bras (69, 70) ou à l'élément porteur (66).

21. Robot industriel selon la revendication 17 ou 18, **caractérisé en ce que** l'articulation (71, 72) est un joint homocinétique dont la partie d'articulation intérieure présente une cavité qui traverse complètement la partie d'articulation.
